# EUROPÄISCHE PATENTSCHRIFT

(11) **EP 4 392 266 B1**
(45) Veröffentlichungstag und Bekanntmachung des Hinweises auf die Patenterteilung: **31.12.2025**
(21) Anmeldenummer: 22769175.5
(22) Anmeldetag: 24.08.2022
(51) Int. Cl.: B60B 7/00, B60B 27/00, B60C 23/00

(54) **NABENKAPPENSYSTEM FÜR EIN FAHRZEUG**
HUB CAP SYSTEM FOR A VEHICLE
SYSTÈME DE CHAPEAU DE ROUE POUR UN VÉHICULE

(30) Priorität: 26.08.2021 DE 102021122133
(43) Veröffentlichungstag der Anmeldung: 03.07.2024
(73) Patentinhaber: SAF-HOLLAND GmbH, 63856 Bessenbach (DE)
(72) Erfinder: STEGMANN, Rainer, 63768 Hösbach (DE); ARPACI, Muhammet, 63743 Aschaffenburg (DE); KATZKE, André, 63879 Weibersbrunn (DE); WEBER, Elmar, 48249 Dülmen (DE); SCHÄFERS, Simon, 61130 Nidderau-Erbstadt (DE)
(74) Vertreter: Müller Schupfner & Partner Patent- und Rechtsanwaltspartnerschaft mbB (Muc)
(86) Internationale Anmeldenummer: PCT/EP2022/073588
(87) Internationale Veröffentlichungsnummer: WO 2023/025849

(56) Entgegenhaltungen:
- EP-A1- 1 738 936
- WO-A1-2017/040802
- WO-A1-2018/136826
- WO-A1-2020/224703
- WO-A2-2020/215063
- DE-T2- 60 109 131
- US-B1- 6 425 427

## Beschreibung

Die Erfindung betrifft ein Nabenkappensystem für ein Fahrzeug und ein Fahrzeug, insbesondere Nutzfahrzeug, umfassend ein Nabenkappensystem, sowie ein Verfahren zum Montieren eines Nabenkappensystems.

Aus dem Stand der Technik ist es bekannt, Reifendruckregulierungssysteme bereitzustellen, welche insbesondere dazu geeignet sind, den Luftdruck von Reifen während der Fahrt automatisch zu regulieren. Das automatische Regulieren des Luftdrucks kann den Vorteil haben, dass die Reifen jederzeit einen optimalen Luftdruck aufweisen, wodurch ein geringerer Verschleiß der Reifen sowie ein geringerer Energieverbrauch beim Fahren erreicht werden kann. Dazu wird in der Regel eine im Fahrzeug angeordnete Druckluftversorgung verwendet, die mit Hilfe eines Luftführungssystems mit den Reifen verbunden ist. Das Luftführungssystem wird insbesondere an den Reifen oder in einer Umgebung der Reifen angeordnet und ist mittels einer Verbindung von Druckluftschläuchen mit der Druckluftversorgung des Fahrzeugs verbunden. Solche Luftführungssysteme sind jedoch oft filigrane Bauteile, die beim Transport der Achsen, z. B. vor der Installation leicht beschädigt werden können, insbesondere wenn sie aus einer Nabenkappe hervorstehen. Im Stand der Technik ist es daher üblich, entsprechende Luftführungssysteme erst bei der Installation der Achse an die Nabenkappe zu befestigen. Beispielsweise indem das Luftführungssystem in ein Innengewinde der Nabenkappe eingeschraubt wird. Dies bedeutet jedoch oft mehr Aufwand bei der Installation und es fallen oft zusätzliche Abfallteile an, die beispielsweise zum Schutz des Innenraums der Radnabe angebracht werden, bevor das Luftführungssystem installiert wird. Ein weiterer Nachteil ist, dass eine Rotationsposition des Luftführungssystems in der Regel nicht vorgegeben ist, wodurch es oftmals zu einer verdrehten Installationsposition des Luftführungssystems kommen kann, was wiederum dazu führen kann, dass das Luftführungssystem oder daran angeschlossene Schläuche Informationstexte und/oder Logos verdecken.

WO 2017 / 040802 A1 beschreibt eine Anordnung für ein System zum Aufpumpen von Fahrzeugreifen mit einer Drehkupplungsspindel und einem Fluidkanal.

DE 601 09 131 T2 beschreibt eine Nabenkappe in einer Radendvorrichtung für ein Reifenaufpumpsystem. Die Radendvorrichtung umfasst eine Radnabe, die drehbar auf einem Achsteil gehalten ist. Die Achse weist einen Luftversorgungskanal auf, der eine Zuluft zu einem Durchgang leitet.

WO 2020 / 215063 A2 beschreibt ein Reifendrucküberwachungssystem mit einer Drehdurchführung mit einer zentralen Bohrung und einer Fluidleitung.

WO 2020 224703 A1 beschreibt eine Nabendeckung für eine Reifenbefüllvorrichtung eines Fahrzeugs. Dabei ist eine Luftversorgung über eine an der Nabenabdeckung angeordnete Drehverbindung mit einem Luftvolumen in einem Reifen eines Fahrzeugrades verbunden. Die Drehdurchführung umfasst einen Adapter, der axial gesichert und drehbar an der Nabenabdeckung angeordnet ist.

WO 2018 / 136826 A1 beschreibt ein Reifenbefüllsystem mit Fluidleitungen, welche ein druckbehaftetes Fluid zu einer Drehdurchführung eines Rades leiten. Die Fluidleitungen können durch Radkomponenten geleitet werden.

Weitere Systeme sind bekannt aus US 6 425 427 B1 und EP 1 738 936 A1.

Es ist daher eine Aufgabe der Erfindung, ein Nabenkappensystem bereitzustellen, bei dem einerseits ein entsprechendes Luftführungssystem vor schädlichen Einflüssen beim Transport des Nabenkappensystems und/oder der Achse, an der das Nabenkappensystem angeordnet ist, geschützt ist. Weiterhin soll nach Möglichkeit eine verdrehte Anordnung des Luftführungssystems an der Nabenkappe verhindert sein.

Diese Aufgabe wird gelöst durch ein Nabenkappensystem gemäß Anspruch 1, ein Fahrzeug gemäß Anspruch 12 sowie ein Verfahren gemäß Anspruch 13. Weitere Vorteile und Merkmale ergeben sich aus den jeweiligen abhängigen Ansprüchen sowie aus der Beschreibung und den Figuren.

Erfindungsgemäß ist ein Nabenkappensystem für ein Fahrzeug, insbesondere ein Nutzfahrzeug, umfassend eine Nabenkappe und ein Luftführungssystem, wobei die Nabenkappe dazu ausgelegt ist, um eine Axialrichtung zu rotieren, wobei die Nabenkappe einen Zentraldurchbruch aufweist, welcher sich insbesondere in die bzw. parallel zur Axialrichtung erstreckt, wobei das Luftführungssystem einen Primäranschluss und einen Sekundäranschluss aufweist, wobei das Luftführungssystem sich teilweise in oder durch den Zentraldurchbruch erstreckt. Das Nutzfahrzeug kann vorzugsweise ein Kraftfahrzeug und/oder ein Anhänger sein. Insbesondere kann das Fahrzeug ein straßentaugliches und/oder ein straßengebundenes Fahrzeug sein. Bei dem Nutzfahrzeug handelt es sich vorzugsweise um ein Fahrzeug mit einem zulässigen Gesamtgewicht von über 3,5 Tonnen, bevorzugt über 7,5 Tonnen und besonders bevorzugt über 18 Tonnen. Die Nabenkappe kann vorzugsweise dazu ausgebildet sein, auf eine Radnabe, insbesondere als eine Art Deckel, aufgesetzt zu werden. Die Nabenkappe kann Befestigungsmittel zur Befestigung an einer Radnabe aufweisen. Die Nabenkappe kann dazu ausgebildet sein, das Eindringen von Schmutz oder generell von Fremdkörpern in einen Innenraum der Radnabe zu verhindern. Die Axialrichtung kann der Richtung einer Rotationsachse entsprechen, um die die Nabenkappe, zumindest näherungsweise, eine Rotationssymmetrie aufweist. Zumindest näherungsweise in diesem Kontext kann dabei insbesondere so zu verstehen sein, dass kleinere Abweichungen wie beispielsweise ein Schriftzug auf der Nabenkappe und/oder bauliche Ungenauigkeiten vernachlässigbar sind. Alternativ oder zusätzlich bevorzugt kann die Axialrichtung diejenige Richtung sein, in die die Hauptachse der Nabenkappe verläuft und/oder in deren Richtung die Nabenkappe die geringste Erstreckung aufweist. Insbesondere kann die Axialrichtung der Drehrichtung einer Radachse entsprechen, an die die Nabenkappe angebracht werden kann. Der Zentraldurchbruch ist vorzugsweise zentral in oder an der Nabenkappe angeordnet. Der Zentraldurchbruch stellt vorzugsweise eine Verbindung einer ersten Seite der Nabenkappe zu einer zweiten Seite, insbesondere einer der ersten Seite gegenüberliegenden zweiten Seite, der Nabe dar. Der Zentraldurchbruch kann vorzugsweise einen runden Querschnitt aufweisen. Insbesondere kann der Zentraldurchbruch, zumindest abschnittsweise, zylinderförmig ausgebildet sein. Alternativ oder zusätzlich kann der Zentraldurchbruch Abweichungen von einer perfekt runden bzw. zylinderförmigen Ausbildung aufweisen, beispielsweise indem in dem Durchbruch Befestigungsmittel zur Befestigung des Luftführungssystems angeordnet sind. Das Luftführungssystem erstreckt sich zumindest teilwiese in oder durch den Zentraldurchbruch. Vorteilhafterweise kann das Luftführungssystem dadurch vor äußeren schädlichen Einflüssen geschützt sein. Das Luftführungssystem kann eine Drehdurchführung umfassen und/oder eine Drehdurchführung sein. Gemäß einer bevorzugten Ausführungsform kann der Primäranschluss auf einer ersten Seite der Nabenkappe angeordnet sein, und der Sekundäranschluss kann auf einer zweiten Seite der Nabenkappe angeordnet sein. Alternativ oder zusätzlich kann der Primäranschluss und/oder der Sekundäranschluss innerhalb des Zentraldurchbruchs angeordnet sein. Der Primäranschluss kann dazu ausgebildet sein, an eine Druckluftleitung, welche zu einer Druckluftversorgung des Fahrzeugs führt, anschließbar zu sein. Der Primäranschluss kann vorzugsweise im Wesentlichen in Axialrichtung orientiert sein, insbesondere mit einer Abweichung von maximal 10°, bevorzugt maximal 5°. Der Sekundäranschluss kann dazu ausgebildet sein, an eine Druckluftleitung, welche mit einem Reifen in Verbindung steht, anschließbar zu sein. Das Luftführungssystem kann im Bereich des Sekundäranschlusses ein Außengewinde umfassen. Das Außengewinde kann dazu konfiguriert sein, einen Anschluss der Druckluftleitung zu ermöglichen bzw. zu sichern. Der Sekundäranschluss kann im Wesentlichen in Axialrichtung orientiert sein, insbesondere mit einer Abweichung von maximal 10°, bevorzugt maximal 5°, besonders bevorzugt maximal 2 ° und besonders stark bevorzugt maximal 1°. Eine Orientierung in Axialrichtung kann einen Schutz des Sekundäranschlusses, beispielsweise durch Anordnung innerhalb der Nabenkappe, erleichtern. Alternativ kann der Sekundäranschluss im Wesentlichen in Radialrichtung orientiert sein, insbesondere mit einer Abweichung von maximal 10°, bevorzugt maximal 5°, besonders bevorzugt maximal 2 ° und besonders stark bevorzugt maximal 1°. Eine Orientierung in Radialrichtung kann einen Anschluss an einen Reifen geometrisch bedingt begünstigen bzw. vereinfachen. Durch das Vorsehen eines Luftführungssystems, welches sich teilweise in oder durch den Zentraldurchbruch erstreckt, kann das Luftführungssystem besonders effektiv - zumindest teilweise - gegen Beschädigungen, insbesondere bei einem Transport, geschützt werden.

Vorteilhafterweise ist das Luftführungssystem reversibel mit der Nabenkappe verbunden. "Reversibel mit der Nabenkappe verbunden" kann insbesondere bedeuten, dass das Luftführungssystem von der Nabenkappe abnehmbar und/oder austauschbar ist. Dadurch kann ein flexibler Austausch des Luftführungssystems ermöglicht werden, wobei mit Vorteil insbesondere eine Wartung erleichtert sein kann.

Vorteilhafterweise kann das Luftführungssystem formschlüssig an der Nabenkappe, insbesondere reversibel, festgelegt sein. Eine formschlüssige Festlegung des Luftführungssystems an der Nabenkappe stellt eine besonders effiziente Möglichkeit der Befestigung dar. Vorteilhafterweise kann diese formschlüssige Festlegung durch einen Klips oder eine Verrastung erfolgen.

Vorteilhafterweise kann/können das Luftführungssystem und/oder die Nabenkappe eine zumindest abschnittsweise um die Axialrichtung umlaufende, insbesondere innere oder äußere, Hinterschneidung umfassen, und/oder die Nabenkappe und/oder das Luftführungssystem kann/können zumindest einen Rastfinger, insbesondere zum Eingreifen in die Hinterschneidung, umfassen, wobei das Luftführungssystem mittels der Hinterschneidung und/oder des zumindest einen Rastfingers an der Nabenkappe fixiert und/oder fixierbar ist. Der zumindest eine Rastfinger kann elastisch zurückbiegbar, insbesondere in Radialrichtung, sein. Vorzugsweise können mehrere Rastfinger vorgesehen sein, wobei die Rastfinger insbesondere um ein gemeinsames Zentrum angeordnet sind, wobei die Rastfinger vorzugsweise mit konstanten Abständen zu dem jeweils nächsten Rastfinger angeordnet sind. Es kann vorgesehen sein, dass das Luftführungssystem mittels der Hinterschneidung und/oder des zumindest einen Rastfingers auf die Nabenkappe aufklickbar ist. Besonders bevorzugt kann die Nabenkappe und/oder das Luftführungssystem vier Rastfinger umfassen, wobei die vier Rastfinger insbesondere um einen zentralen Punkt herum, insbesondere kreisförmig, und vorzugsweise in gleichen Abständen angeordnet sind. Der zentrale Punkt kann insbesondere das Zentrum der Nabenkappe und/oder das Zentrum des zentralen Durchbruchs sein. Die Nabenkappe und/oder das Luftführungssystem kann ein kreisförmiges insbesondere im Wesentlichen flaches Element umfassen, in oder an das die Rastfinger eingreifen können und/oder welches die Hinterschneidung umfasst. Mit zumindest einem Rastfinger und/oder mit einer Hinterschneidung kann eine besonders effiziente und für den Zusammenbau unkomplizierte Art der Befestigung ermöglicht werden.

Vorteilhafterweise kann/können das Luftführungssystem und/oder die Nabenkappe derart ausgestaltet sein, dass das Luftführungssystem rotationsfest, insbesondere formschlüssig, gegenüber der Nabenkappe gehalten ist. Rotationsfest kann dabei insbesondere bedeuten, dass das Luftführungssystem und die Nabenkappe zueinander nicht rotierbar und/oder im Wesentlichen nicht rotierbar sind. Insbesondere kann die Nabenkappe außen derart geformt sein, dass eine Verdrehung des Luftführungssystems zu der Nabenkappe verhindert ist. "Im Wesentlichen nicht rotierbar" kann dabei insbesondere bedeuten, dass eine geringfügige Rotation, insbesondere durch konstruktionstechnische Einschränkung, noch möglich ist. Vorzugsweise bedeutet eine geringfügige Rotation eine Rotation um weniger als 5°, besonders bevorzugt um weniger als 3°, besonders bevorzugt um weniger als 1°. Es kann insbesondere vorgesehen sein, dass das Luftführungssystem und die Nabenkappe derart ausgebildet sind, dass beim Fahren des Fahrzeugs sich das Luftführungssystem und die Nabenkappe gleichermaßen mit den Rädern des Fahrzeugs drehen. Vorteilhafterweise kann dadurch die Positionierung des Luftführungssystems und/oder der Leitung von dem Luftführungssystem zu den Reifen konstant ausgebildet sein, im Verhältnis zu der Nabenkappe und/oder dem gesamten Reifen.

Vorteilhafterweise kann/können das Luftführungssystem und/oder die Nabenkappe derart ausgestaltet sein, dass das Luftführungssystem nur in einer einzigen vorbestimmten Position, insbesondere Drehposition vorteilhafterweise um die Axialrichtung, an der Nabenkappe befestigt sein kann, oder das Luftführungssystem und/oder die Nabenkappe kann/können derart ausgestaltet sein, dass das Luftführungssystem nur in einer festgelegten Anzahl von mehreren vorbestimmten Positionen, insbesondere Drehpositionen um die Axialrichtung, an der Nabenkappe befestigt sein kann. Indem das Luftführungssystem relativ zu der Nabenkappe nur in einer einzigen Position befestigt werden kann, kann sichergestellt werden, dass bei der Installation des Luftführungssystems eine vorher als optimal festgelegte relative Position des Luftführungssystems zu der Nabenkappe eingehalten wird. Vorteilhafterweise kann dadurch insbesondere verhinderbar sein, dass wichtige Elemente der Nabenkappe und/oder des Reifens beispielsweise Informationstexte, Logos, Marken und/oder wichtige Anschlüsse durch das Luftführungssystem bzw. durch an das Luftführungssystem angeschlossene Luftleitungen nicht verdeckt werden. Durch das Vorsehen von mehreren vorbestimmten Positionen kann dieser Vorteil damit kombiniert werden, dass eine gewisse Flexibilität bei der Installation des Luftführungssystems noch gegeben ist. Vorzugsweise kann das Luftführungssystem in vier vorbestimmten Positionen, insbesondere Drehpositionen, an der Nabenkappe befestigbar sein. Die vorbestimmten Drehpositionen, insbesondere die vier Drehpositionen, können insbesondere gleichmäßige Winkelabstände zu einander aufweisen. Beispielsweise kann eine Fixierung in der Position 0°, 90°, 180° und 270° vorgesehen sein. Eine flexible Positionierungsmöglichkeit von vier Positionen kann insbesondere vorteilhaft sein, um verschiedene Modelle von Nabenkappen und/oder Luftführungssystemen möglichst sinnvoll und effizient miteinander kombinieren zu können, indem bei der Installation je nach Modell eine unterschiedliche Positionierung gewählt werden kann. Vorzugsweise kann das Luftführungssystem einen, insbesondere im Wesentlichen quadratischen, Vierkant umfassen. Der Vierkant kann dazu ausgestaltet sein, von außen in die Nabenkappe eingesteckt zu werden bzw. eingesteckt zu sein.

Vorteilhafterweise kann die vorbestimmten Positionen jeweils noch ein Spiel für die Positionierung des Luftführungssystems aufweisen, wobei das Spiel insbesondere eine Verdrehung, insbesondere von bis zu 15°, vorzugsweise von bis zu 5°, besonders bevorzugt von bis zu 3° und besonders stark bevorzugt von bis zu 1°, des Luftführungssystem um eine zu der Axialrichtung parallelen Drehachse erlaubt. Ein gewisses Spiel bei der Positionierung kann vorteilhafterweise eine Anpassung an individuelle Gegebenheiten ermöglichen. Eine mögliche Verdrehung von bis zu 15° kann ein besonders gutes Anpassen des Luftführungssystems ermöglichen. Eine mögliche Verdrehung von bis zu 5° erlaubt z. B. ein Umgehen von unvorhergesehenen Hindernissen in der 0° Position während gleichzeitig sichergestellt ist, dass von der als optimal festgelegten Position nicht zu stark abgewichen wird. Eine Verdrehbarkeit von bis zu 3° stellt einerseits eine sehr präzise Einstellung dar und erlaubt es gleichzeitig noch, geringfügige Abweichungen von verschiedenen Bauteilen, beispielsweise aus verschiedenen Serien, anpassen zu können. Eine Verdrehung von bis zu 1° ermöglicht es, eine sehr genau bestimmte Drehposition einzuhalten, während die Installation durch das geringfügige Spiel von 1° noch, beispielsweise aufgrund geringerer Reibung, vereinfacht ist gegenüber einer Ausfertigung ohne Spiel.

Vorteilhafterweise kann zum Fixieren des Luftführungssystems an der Nabenkappe das Luftführungssystem zumindest einen, bevorzugt mehrere, Rastfinger umfassen und/oder die Nabenkappe kann zumindest eine, bevorzugt mehrere, Einrastpositionen für die Rastfinger umfassen, und/oder zum Fixieren des Luftführungssystem an der Nabenkappe kann die Nabenkappe zumindest eine, bevorzugt mehrere, Rastfinger umfassen und/oder das Luftführungssystem kann zumindest eine, bevorzugt mehrere, Einrastpositionen für die Rastfinger umfassen. Insbesondere können die Rastfinger und die Einrastpositionen derart angeordnet sein, dass das Luftführungssystem nur in einer einzigen vorbestimmten Position, insbesondere Drehposition, an der Nabenkappe befestigt sein kann, oder die Rastfinger und die Einrastpositionen können derart angeordnet sein, dass das Luftführungssystem nur in einer festgelegten Menge von mehreren vorbestimmten Positionen, insbesondere Drehpositionen um die Axialrichtung, an der Nabenkappe befestigt sein kann. Die Einrastpositionen können z. B. Bohrungen und/oder Ausnehmungen sein, wobei die Bohrungen und/oder Ausnehmungen insbesondere derart ausgebildet sind, dass ein Ende der Rastfinger gerade durch diese Bohrungen hindurchpasst und/oder in die Ausnehmungen eingreifen kann. Vorteilhafterweise kann durch diese Einrastposition festgelegt sein, dass das Luftführungssystem nur in vorbestimmten Positionen in der Nabenkappe fixiert werden kann. Zweckmäßigerweise sind die Rastfinger und die Einrastpositionen derart zueinander ausgebildet, sodass diese formschlüssig eine relative Rotation der Luftführungssystems zu der Nabenkappe verhindern.

Vorteilhafterweise kann das Luftführungssystem ein Außengewinde aufweisen, wobei die Nabenkappe, insbesondere in einem zentralen Bereich, ein Innengewinde aufweist, wobei das Luftführungssystem anhand seines Außengewindes in das Innengewinde der Nabenkappe eingeschraubt und/oder einschraubbar ist. Ein Einschrauben des Luftführungssystems kann eine besonders einfache Möglichkeit darstellen, das Luftführungssystem an der Nabenkappe zu befestigen. Zweckmäßigerweise sind das Außengewinde und/oder das Innengewinde selbstdichtend ausgebildet, insbesondere als ein Whitworthgewinde.

Alternativ oder zusätzlich kann/können das Luftführungssystem und/oder die Nabenkappe z.B. einen Bajonettverschluss umfassen, wobei das Luftführungssystem mittels des Bajonettverschlusses an der Nabenkappe befestigt und/oder befestigbar ist.

Vorteilhafterweise kann das Luftführungssystem ein Luftleitungsrohr zur Durchführung von Druckluft durch den Zentraldurchbruch umfassen, wobei der Zentraldurchbruch insbesondere zylindrisch ausgebildet ist, wobei das Luftführungssystem über ein Befestigungselement an einer Innenwand des Zentraldurchbruchs und/oder an dem Luftleitungsrohr an der Nabenkappe befestigt und/oder befestigbar ist. Vorteilhafterweise kann damit die Befestigung des Luftführungssystems innerhalb des Zentraldurchbruchs vorgesehen sein. Das kann einerseits den Vorteil haben, dass das Befestigungselement selbst vor äußeren Einflüssen geschützt ist, und insbesondere ein versehentliches Lösen des Luftführungssystems von der Nabenkappe erschwert oder gar unmöglich gemacht wird, wobei andererseits auch ein optisches Stören dieses Befestigungselement im Gesamteindruck verhindert sein kann.

Vorteilhafterweise kann das Luftleitungsrohr zumindest eine, vorteilhafterweise äußere, Rastnase und/oder einen Klippmechanismus umfassen, wobei in dem Zentraldurchbruch zumindest eine zu der Rastnase und/oder zu dem Klippmechanismus komplementäre Ausgestaltung oder Ausnehmung ausgebildet ist, wobei das Luftführungssystem mittels der Rastnase und/oder dem Klippmechanismus in Verbindung mit der komplementären Ausgestaltung oder Ausnehmung an der Nabenkappe befestigt und/oder befestigbar ist. Alternativ kann es auch vorgesehen sein, dass die Rastnase und/oder der Klippmechanismus in dem Zentraldurchbruch angeordnet ist, wobei das Luftleitungsrohr die zu der Rastnase oder dem Klippmechanismus komplementäre Ausnehmung umfasst. Eine Verbindung mittels der Rastnase und/oder dem Klippmechanismus kann eine besonders einfache Installation, bei der das Luftleitungsrohr insbesondere nur in den Zentraldurchbruch eingeschoben werden muss, ermöglichen.

Vorteilhafterweise können die Nabenkappe und das Luftführungssystem jeweils eine Nut aufweisen, wobei das Luftführungssystem mittels eines Sprengrings über die beiden Nuten axial fixiert und/oder fixierbar ist. Diese Ausführungsform kann somit eine verhältnismäßig einfache aber gleichzeitig sehr sichere Möglichkeit der Befestigung darstellen.

Vorteilhafterweise kann das Luftführungssystem im Bereich des Primäranschlusses und/oder an dem dem Primäranschluss zugewandten Ende des Luftleitungsrohrs einen Rastmechanismus, insbesondere in Form einer Hinterschneidung oder von zumindest einem Rastfinger, aufweisen, wobei das Luftführungssystem mittels des Rastmechanismus durch Verspannen mit einem Bereich der Nabenkappe um den Zentraldurchbruch herum verspannt und/oder verspannbar ist. Beispielsweise kann es vorgesehen sein, dass der zumindest eine Rastfinger, vorzugsweise mehrere Rastfinger, mit einer Fläche der Nabenkappe, welche an der Mündung des Zentraldurchbruchs angeordnet ist, verspannbar ist/sind. Vorteilhafterweise kann es beispielsweise möglich sein, das Luftführungssystem durch Zusammendrücken der Rastfinger bzw. des Rastmechanismus in den Zentraldurchbruch einzuführen und vorzuschieben, wobei der Rastmechanismus einrastet sobald das Luftführungssystem komplett bzw. weit genug in den Zentraldurchbruch eingeführt ist.

Vorteilhafterweise kann das Luftführungssystem derart ausgestaltet sein, dass es in einem Kontaktbereich mit der Nabenkappe im Querschnitt gesehen nicht-rund, insbesondere eckig, vorzugsweise viereckig, ausgeformt ist und im Bereich des Primäranschlusses in einen runden, insbesondere kreisrunden Querschnitt übergeht.

Vorteilhafterweise kann das Nabenkappensystem ein Adapterelement umfassen, wobei das Luftführungssystem mit dem Adapterelement reversibel verbunden und/oder verbindbar ist, wobei das Adapterelement reversibel mit der Nabenkappe verbunden und/oder verbindbar ist. Die Verbindung zwischen dem Luftführungssystem und dem Adapterelement und/oder die Verbindung zwischen dem Adapterelement und der Nabenkappe kann analog aufgeführt sein und entsprechende Vorteile und Merkmale aufweisen wie die hierin beschriebene Verbindung zwischen dem Luftführungssystem und der Nabenkappe und umgekehrt. Ein Adapterelement kann eine besonders große Flexibilität bei der Befestigung des Luftführungssystems an der Nabenkappe ermöglichen. Insbesondere kann es möglich sein, an sich nicht kompatible Luftführungssysteme und Nabenkappen miteinander zu verbinden, indem ein Adapterelement verwendet wird. Gemäß einer Ausführungsform kann das Adapterelement eine um die Axialrichtung umlaufende, insbesondere innere oder äußere, Hinterschneidung und/oder zumindest einen Rastfinger umfassen, wobei das Adapterelement mittels der Hinterschneidung und/oder des Rastfingers an der Nabenkappe fixiert und/oder fixierbar ist. Alternativ oder zusätzlich kann das Adapterelement ein Innengewinde und das Luftführungssystem ein dazu passendes Außengewinde aufweisen, wobei das Luftführungssystem in das Adapterelement eingeschraubt und/oder einschraubbar ist.

Vorteilhafterweise kann das Adapterelement einen Dübel-artigen Mechanismus zum Verspannen und/oder Verklemmen mit der Nabenkappe umfassen. Der Dübel-artige Mechanismus kann eine Öffnung zum Einführen des Luftführungssystems umfassen, insbesondere kann der Dübel-artige Mechanismus ein Innengewinde umfassen, welches dazu ausgelegt ist, dass das Luftführungssystem hineingeschraubt werden kann. Der Dübel-artige Mechanismus kann zumindest ein, bevorzugt mehrere Rastfinger umfassen, welche insbesondere dazu ausgelegt sind, mit dem Zentraldurchbruch und/oder mit einer Fläche, in die der Zentraldurchbruch mündet, verspannbar zu sein. Alternativ oder zusätzlich kann der Dübel-artige Mechanismus derart ausgebildet sein, dass er sich aufweitet, sich insbesondere mit der Nabenkappe und/oder dem Zentraldurchbruch verspannt, wenn das Luftführungssystem in den Dübel-artigen Mechanismus eingeführt wird. Der Dübel-artige Mechanismus kann daher auch aus Aufweit-Mechanismus bezeichnet werden. Insbesondere kann der Dübel-artige Mechanismus einen oder mehrere Rastfinger umfassen, mit dem/denen der Dübel-artige Mechanismus sich mit der Nabenkappe, insbesondere dem Zentraldurchbruch, verspannen kann.

Vorteilhafterweise kann es vorgesehen sein, dass die Nabenkappe die distalen Endbereiche des Nabenkappensystems in Richtung der Axialrichtung ausbildet oder ausbilden kann. Insbesondere kann es vorgesehen sein, dass das Luftführungssystem die Nabenkappe in Axialrichtung nicht überragt bzw. dass die Nabenkappe in Axialrichtung weiter hervorsteht als das Luftführungssystem. Vorteilhafterweise kann das Luftführungssystem auf diese Weise geschützt sein, sowohl beim Transport des Nabenkappensystems, insbesondere vor der Installation, als auch beim Einsatz des Nabenkappensystems nach der Installation.

Vorteilhafterweise kann die Nabenkappe ein Schutzelement, insbesondere eine Schutzplatte, umfassen, wobei das Schutzelement einen der distalen Endbereiche des Nabenkappensystems in Richtung der Axialrichtung ausbildet, wobei das Schutzelement sich derart in Radialrichtung erstreckt, dass es das Luftführungssystem in Axialrichtung zumindest abschnittsweise abdeckt, wobei insbesondere das Schutzelement in einer Radialrichtung gesehen im Wesentlichen zentral auf der Nabenkappe angeordnet sein kann. Vorteilhafterweise kann das Schutzelement in der Axialrichtung eine geringere Erstreckung aufweisen als in den Radialrichtungen. Das Schutzelement kann mittels eines kraft- und/oder formschlüssigen Verbindungsmechanismus mit der restlichen Nabenkappe verbunden sein. Beispielsweise kann das Schutzelement über einen Einrastmechanismus, über einen Bajonettverschluss und/oder über eine Gewindeverbindung, beispielsweise durch Einschrauben, mit der übrigen Nabenkappe verbunden sein. Das Schutzelement kann einen guten Schutz für das Luftführungssystem darstellen, indem es das Luftführungssystem, insbesondere die empfindlichsten Teile des Luftführungssystems, in Axialrichtung komplett oder zumindest teilweise schützt.

Vorteilhafterweise kann das Luftführungssystem in einer Vertiefung in der Nabenkappe angeordnet sein. Ein Anordnen des Luftführungssystems in einer Vertiefung in der Nabenkappe kann einen besonders effektiven Schutz des Luftführungssystems ermöglichen, insbesondere auch in der Radialrichtung. Vorzugsweise kann es vorgesehen sein, dass das Luftführungssystem die Nabenkappe in der Axialrichtung nicht überragt.

Vorteilhafterweise kann die Vertiefung in zumindest einer Radialrichtung bis zu einem radialen Ende der Nabenkappe durchgehend ausgebildet sein. Ist die Vertiefung in zumindest einer Radialrichtung bis zum radialen Ende der Nabenkappe durchgehend ausgebildet, so kann dies den Vorteil haben, dass einerseits das Luftführungssystem durch die Platzierung in der Vertiefung geschützt ist, während andererseits ein Anschluss an das Luftführungssystem, beispielsweise durch einen Verbindungsschlauch zu dem Reifen des Fahrzeugs, aufgrund der durchgehenden Vertiefung besonders einfach möglich ist. Die Verbindung zu dem Luftführungssystem kann in diesem Fall beispielsweise seitlich bzw. radial von den Luftführungssystemen weggeführt werden.

Vorteilhafterweise kann die Vertiefung zumindest abschnittsweise kreissegmentartig und/oder gemäß einem radial äußeren Abschnitt eines Kreissegments ausgebildet sein, wobei der Winkel des Kreisbogens des Kreissegments insbesondere zwischen 40° und 170°, bevorzugt zwischen 50° und 130° und besonders bevorzugt zwischen 60° und 100° liegt. Die kreissegmentartige Ausbildung der Vertiefung kann insbesondere derart ausgebildet sein, dass die Vertiefung zum Rand der Nabenkappe hin und/oder wegführend von dem Luftführungssystem zunehmend breiter wird. Eine kreissegmentartige Ausbildung kann deswegen vorteilhaft sein, weil einerseits das Luftführungssystem, welches sich bevorzugt im Inneren des Kreises befindet, durch die dort enger ausgeführte Vertiefung besser geschützt ist, während durch die sich aufweitende Vertiefung in dem äußeren Bereich des Kreises ein guter und einfacher Anschluss an das Luftführungssystem möglich ist. Ein Winkel des Kreisbogens zwischen 40° und 170° ermöglicht einen besonders guten Zugang zu dem Luftführungssystem. Ein Kreissegment mit einem Winkel zwischen 50° und 130° ermöglicht es, das Luftführungssystem besonders gut und effizient gegen Einflüsse aus radialer Richtung von der Seite des Luftführungssystems zu schützen. Ein Winkel zwischen 60° und 100° ermöglicht es darüber hinaus, das Kreissegment als Eingriff für ein Werkzeug in die Nabenkappe zu verwenden, beispielsweise um die Nabenkappe zu verdrehen, wenn das Reifenventil nicht in der richtigen Position ist.

Vorteilhafterweise kann die Nabenkappe ein sich in Axialrichtung erstreckendes Kragenelement umfassen, wobei zumindest ein in Axialrichtung von dem Zentraldurchbruch abgewandter distaler Endabschnitt des Kragenelements in der Axialrichtung das Luftführungssystem überragt, wobei das Kragenelement insbesondere zumindest einen Teil des Luftführungssystems und/oder den Zentraldurchbruch zumindest abschnittsweise in eine Radialrichtung umgibt bzw. einzäunt. Mit anderen Worten kann es vorgesehen sein, dass das Kragenelement den distalen Endabschnitt des kompletten Nabenkappensystems in der Axialrichtung bildet und dadurch insbesondere das Luftführungssystem vor äußeren Einflüssen schützen kann. Unter einem "Einzäunen" kann verstanden werden, dass das Kragenelement das Luftführungssystem und/oder den Zentraldurchbruch in Radialrichtung umgibt bzw. zumindest abschnittsweise umgibt. In anderen Worten kann das Kragenelement derart angeordnet sein, dass es in Radialrichtung zumindest abschnittsweise weiter außen angeordnet ist als das Luftführungssystem. Vorteilhafterweise kann das Kragenelement das Luftführungssystem sowohl in Axialrichtung als auch in Radialrichtung schützen, insbesondere kann durch das Kragenelement verhindert sein, dass ein Abbrechen oder Beschädigen des Luftführungssystems durch Stöße, die in Radialrichtung verlaufen, auftritt.

Vorteilhafterweise kann das Kragenelement in Axialrichtung eine variable Erstreckung umfassend zumindest eine, zumindest lokale, Minimalerstreckung aufweisen, wobei der Sekundäranschluss des Luftführungssystems im Bereich der Minimalerstreckung angeordnet ist. Insbesondere kann das Kragenelement sich im Bereich der Minimalerstreckung in Axialrichtung weniger weit erstrecken als das Luftführungssystem. Vorteilhafterweise kann auf diese Weise ein Anschluss an den Sekundäranschluss des Luftführungssystems aus radialer Richtung ermöglicht sein.

Vorteilhafterweise kann der Sekundäranschluss in Radialrichtung über das Kragenelement hinausragen und/oder in Axialrichtung jenseits der Minimalerstreckung des Kragenelements angeordnet sein. Durch eine solche Ausführungsform kann das Luftführungssystem in wesentlichen Teilen durch das Kragenelement vollständig geschützt sein und gleichzeitig kann eine einfache Anbindung an den Sekundäranschluss des Luftführungssystems möglich sein.

Erfindungsgemäß ist das Luftführungssystem in Axialrichtung, insbesondere translatorisch, verlagerbar und/oder ausziehbar. Nämlich ist das Luftführungssystem relativ zu der Nabenkappe verlagerbar und/oder ausziehbar.

Beispielsweise kann das Nabenkappensystem durch eine derartige Ausgestaltung einerseits für den Transport vor der Installation gesichert werden und andererseits durch Verlagern bzw. Ausziehen für einen Einsatz nach der Installation etwas weiter über die Nabenkappe hervorstehen. Gemäß einer bevorzugten Ausführungsform kann das Luftführungssystem von einer ersten Position in eine zweite Position überführbar sein, wobei insbesondere das Luftführungssystem in der zweiten Position in Axialrichtung gesehen über die Nabenkappe hinausragt wobei insbesondere das Luftführungssystem in der ersten Position in Axialrichtung gesehen nicht über die Nabenkappe hinausragt. Insbesondere kann die erste Position für einen Transport des Luftführungssystems gedacht sein, während die zweite Position für einen Einsatz nach der Installation des Luftführungssystems gedacht ist. Das Luftführungssystem kann derart ausgebildet sein, dass es in der ersten Position nicht über die Nabenkappe des Nabenkappensystems hinausragt. Alternativ oder zusätzlich kann das Luftführungssystem derart ausgebildet sein, dass es in der zweiten Position in Axialrichtung insbesondere mit seinem Sekundäranschluss über die Nabenkappe hinausragt. Mit Vorteil kann somit insbesondere effizient zwischen einer Transport- und einer Einsatzposition des Luftführungssystems gewechselt werden. Vorteilhafterweise befindet sich dabei das Luftführungssystem in allen diesen Positionen in einem montierten Zustand in Relation zum Nabenkappe.

Vorteilhafterweise kann das Nabenkappensystem zumindest ein Fixierelement zum, insbesondere formschlüssigen, Fixieren des Luftführungssystems in der zweiten und/oder der ersten Position mittels eines Kontaktabschnitts des Fixierelements umfassen. Gemäß einer Ausführungsform kann das Nabenkappensystem zumindest ein Hakenelement zum Fixieren des Luftführungssystems in der zweiten und/oder der ersten Position mittels eines Kontaktabschnitts des Hakenelements umfassen, wobei der Kontaktabschnitt insbesondere in einer quer zu der Axialrichtung verlaufenden Radialrichtung zum Freigeben des Luftführungssystems verlagerbar ist. Alternativ oder zusätzlich kann das Nabenkappensystem, insbesondere als Teil der Nabenkappe und/oder des Luftführungssystems, zumindest eine Rastnase zum Fixieren des Luftführungssystems in der zweiten und/oder ersten Position umfassen. Durch ein Fixierelement kann vorteilhafterweise verhindert werden, dass das Luftzuführungssystem versehentlich verlagert und/oder ausgezogen wird. Vorzugsweise kann das Fixierelement, insbesondere das Hakenelement, einen Federmechanismus zum Vorspannen des Fixierelements, insbesondere des Hakenelements, in einer Position, in der das Luftführungssystem durch das Fixierelement, insbesondere das Hakenelement, fixiert ist, umfassen.

Vorteilhafterweise kann das Luftführungssystem einen Teleskopmechanismus, insbesondere zum Ein- und Ausziehen des Luftführungssystems, umfassen. Ein Teleskopmechanismus kann eine besonders einfache Möglichkeit für eine Verlagerbarkeit des Luftführungssystems darstellen. Insbesondere kann das Luftführungssystem zumindest einen ersten zylinderförmigen Körper und einen zweiten zylinderförmigen Körper umfassen, wobei die Orientierung der Achse beider Zylinder im Wesentlichen der Axialrichtung entspricht bzw. entsprechen kann, wobei der zweite zylinderförmige Körper einen geringeren Durchmesser als der erste zylinderförmige Körper aufweisen kann und/oder konzentrisch sowie zumindest abschnittsweise überlappend zu diesem angeordnet sein, wobei der erste und der zweite zylinderförmige Körper zum Zwecke des Ausziehens der Drehdurchführung in Axialrichtung relativ zueinander verlagerbar sein können.

Vorteilhafterweise kann das Nabenkappensystem eine Faltenbalgvorrichtung, insbesondere zum Ein- und Ausziehen und/oder Verlagern des Luftführungssystems in Axialrichtung, umfassen. Insbesondere kann es vorgesehen sein, dass die Faltenbalgvorrichtung derart angeordnet ist, dass im ausgezogenen Zustand der Faltenbalgvorrichtung das Luftführungssystem vollständig innerhalb der Nabenkappe angeordnet ist und/oder dass bei einer vollständig zusammengezogenen Faltenbalgvorrichtung das Luftführungssystem über die Nabenkappe hervorsteht und/oder weiter in Axialrichtung nach außen verschoben ist. Insbesondere kann es vorgesehen sein, dass das Luftführungssystem zumindest teilweise innerhalb der Faltenbalgvorrichtung angeordnet ist, insbesondere wenn die Faltenbalgvorrichtung ausgefahren ist. Vorteilhafterweise kann die Faltenbalgvorrichtung dadurch einerseits ein Verlagern des Luftführungssystems ermöglichen und andererseits ein Schutz des Luftführungssystems vor äußeren Einflüssen darstellen.

Vorteilhafterweise kann die Nabenkappe einen Zentralkörper und einen Montagekörper aufweisen, wobei der Montagekörper dazu dient, insbesondere mittels Befestigungsmitteln, die Nabenkappe an einem Rad oder einer Nabe festzulegen, wobei der Zentralkörper den Zentraldurchbruch ausbildet und/oder wobei der Zentralkörper in oder an einer Montageöffnung des Montagekörpers festgelegt ist. Die Befestigung des Zentralkörpers an dem Montagekörper kann grundsätzlich analog zu der hierhin beschriebenen Befestigung des Luftführungssystems an der Nabenkappe ausgestaltet sein. Alternativ kann die Befestigung zwischen Montagekörper und Zentralkörper auch unterschiedlich ausgebildet sein. Vorteilhafterweise können insbesondere sowohl der Zentralkörper als auch der Montagekörper auf diese Weise als modulare Teile je nach Anforderung an den Zentralkörper und an den Montagekörper miteinander kombiniert werden. Vorteilhafterweise können der Montagekörper und der Zentralkörper mittels einer, insbesondere umlaufenden, Rastnase und einer dazu komplementären, insbesondere umlaufenden, Ausnehmung, miteinander festgelegt und/oder miteinander festlegbar sein.

Ein weiterer Aspekt ist ein Fahrzeug, insbesondere Nutzfahrzeug, umfassend ein Nabenkappensystem, einen Dichtring und/oder ein Radkappensystem wie vorhergehend und nachfolgend beschrieben. Alle Vorteile, Ausführungsformen und Merkmale des Nabenkappensystems, des Dichtrings und des Radkappenkappensystems können analog auf das Fahrzeug übertragen werden und umgekehrt.

Ein weiterer Aspekt ist auch auf ein Verfahren zum Herstellen und/oder Montieren eines Nabenkappensystems mit einer Nabenkappe und einem Luftführungssystem für ein Reifendruckregulierungssystem gerichtet, umfassend die Schritte
- Verlagern, insbesondere translatorisches Verlagern relativ zu der Nabenkappe, des Luftführungssystems in Axialrichtung in eine erste Position, sodass das Luftführungssystem in Axialrichtung der Nabenkappe gesehen nicht über die Nabenkappe hinausragt;
- Verlagern bzw. Bereitstellen des Nabenkappensystems;
- Einbauen des Nabenkappensystems in und/oder an ein Fahrzeug, insbesondere Nutzfahrzeug, und/oder in ein Rad eines Fahrzeugs, insbesondere Nutzfahrzeugs;
- Verlagern, insbesondere translatorisches Verlagern relativ zu der Nabenkappe, des Luftführungssystems in Axialrichtung in eine zweite Position, sodass das Luftführungssystem in Axialrichtung der Nabenkappe gesehen zumindest auf einer Seite über die Nabenkappe hinausragt.

Vorteilhafterweise ist dabei das Luftführungssystem sowohl in der ersten Position als auch in der zweiten Position an der Nabenkappe montiert und/oder an dieser befestigt und/oder festgelegt. Unter einem montiert und/oder befestigt kann verstanden werden, dass Kräfte und/oder Momente zwischen der Nabenkappe und dem Luftführungssystem direkt oder indirekt übertragen werden können. Alle Vorteile und Merkmale des Nabenkappensystems und des Fahrzeugs können analog auf das Verfahren übertragen werden und umgekehrt.

Ein weiterer Aspekt ist ein Nabenkappensystem, insbesondere ein Nabenkappensystem wie vorhergehend und nachfolgend beschrieben, umfassend einen Dichtring, insbesondere wie nachfolgend beschrieben.

Ein weiterer Aspekt ist ein Dichtring umfassend einen Haltebereich, eine Primärdichtlippe und eine Sekundärdichtlippe, wobei der Haltebereich umlaufend um eine Axialrichtung ausgebildet ist, wobei eine Radialrichtung sich radial und senkrecht von der Axialrichtung weg erstreckt, wobei die Primärdichtlippe und die Sekundärdichtlippe eine Erstreckung in Radialrichtung, insbesondere in positive Radialrichtung, aufweisen. Die Axialrichtung bezeichnet insbesondere eine zu der durch den Dichtring aufgespannten Fläche senkrechte Richtung. Die Axialrichtung bzw. die Mittelachse verläuft bevorzugt durch den Mittelpunkt des Dichtrings. Die Radialrichtung verläuft insbesondere von dem Mittelpunkt bzw. der Mittelachse des Dichtrings radial nach außen und/oder senkrecht zu der Axialrichtung. Dabei kann unter einer positiven Radialrichtung eine Richtung, welche von dem Mittelpunkt bzw. der Mitteachse des Dichtrings radial nach außen verläuft, verstanden werden, während unter einer negativen Radialrichtung eine Richtung verstanden werden kann, die von außen radial zum Mittelpunkt bzw. zu der Mittelachse des Dichtrings zeigt. Der Dichtring kann einen im Wesentlichen konstanten Querschnitt und/oder einen überwiegend bzw. abschnittsweise konstanten Querschnitt aufweisen, insbesondere in einer Richtung quer zu der Axialrichtung und quer zu der Radialrichtung. Im Wesentlichen konstant bedeutet dabei in diesem Kontext insbesondere, dass der Dichtring abgesehen von konstruktionsbedingten Abweichungen einen konstanten Querschnitt aufweist. Überwiegend bzw. abschnittsweise konstant kann bedeuten, dass der Dichtring einen im Wesentlichen konstanten Querschnitt aufweist, jedoch stellenweise von diesem konstanten Querschnitt abweicht, z.B. durch zumindest einen Durchbruch. Vorteilhafterweise kann der Dichtring einstückig ausgebildet sein. Eine einstückige Ausbildung kann eine besonders sichere Dichtwirkung ermöglichen und ggf. Montagefehler durch fehlerhaftes Zusammensetzen verhindern. Beispielsweise kann der Dichtring an dem Ort seines vorgesehenen Einsatzes elastisch aufziehbar sein. Der Dichtring weist einen Haltebereich auf, wobei der Haltebereich insbesondere einen Anlagebereich des Dichtrings, z.B. an eine Nabenkappe und/oder an eine Radnabe, umfasst und/oder zur Anlage an z.B. eine Nabenkappe und/oder an eine Radnabe ausgebildet ist. Der Haltebereich kann ein Grundkörper, welcher den überwiegenden Teil der Masse und/oder des Volumens des Dichtrings ausmacht, sein. Der Haltebereich kann einen ungefähr rechteckigen Querschnitt aufweisen, und/oder wobei beispielsweise die Ecken des Haltebereichs abgerundet sein können und/oder wobei der Haltebereich an einer Seite, an der die Primärdichtlippe und/oder die Sekundärdichtlippe angeordnet oder ausgebildet ist/sind und/oder an den Haltebereich anschließen, von der rechteckigen Querschnittsform abweichen kann. Der Haltebereich und/oder der Dichtring kann Aussparungen, Vertiefungen und/oder Durchbrüche oder Durchbohrungen umfassen, welche insbesondere der Leitung und/oder dem Aufenthalt von Luft dienen können. Der Haltebereich ist umlaufend um eine Axialrichtung und/oder um eine Mittelachse des Dichtrings angeordnet. Die Primärdichtlippe und/oder die Sekundärdichtlippe kann an den Haltebereich anschließen. Alternativ kann die Primärdichtlippe und/oder die Sekundärdichtlippe von dem Haltebereich beabstandet sein. Beispielsweise kann ein Übergangsbereich zwischen dem Haltebereich sowie der Primärdichtlippe und/oder der Sekundärdichtlippe vorgesehen sein. Die Primärdichtlippe und/oder die Sekundärdichtlippe kann vorzugsweise elastisch ausgebildet sein. Zweckmäßigerweise ist der Haltebereich, die Sekundärdichtlippe und/oder die Primärdichtlippe aus dem gleichen Werkstoff ausgebildet. Vorteilhafterweise ist der Haltebereich stofflich mit der Primärdichtlippe und/oder der Sekundärdichtlippe verbunden, wobei hierdurch eine besonders hohe mechanische Belastbarkeit und Dichtwirkung erreicht werden kann. Eine angegebene Erstreckung der Primärdichtlippe und der Sekundärdichtlippe kann sich insbesondere auf einen entspannten, d.h. insbesondere nicht elastisch verformten Zustand der Dichtlippen beziehen. Eine Erstreckung der Primärdichtlippe und/oder der Sekundärdichtlippe bezieht sich insbesondere auf eine Erstreckung entlang der Haupterstreckung bzw. der längsten Erstreckung der jeweiligen Dichtlippe. Die Primärdichtlippe und/oder die Sekundärdichtlippe kann sich anteilig noch in eine weitere Richtung zusätzlich zu der Radialrichtung erstrecken, z.B. in Axialrichtung. Die Erstreckung der Primärdichtlippe und/oder der Sekundärdichtlippe weist demnach zumindest eine Komponente in Radialrichtung auf. Optional kann die Erstreckung der Primärdichtlippe und/oder der Sekundärdichtlippe eine weitere Komponente in eine andere Richtung aufweisen. Beispielsweise kann die Primärdichtlippe und/oder die Sekundärdichtlippe sich schräg zu der Radialrichtung erstrecken. Eine Richtung der Erstreckung der Primärdichtlippe und/oder der Sekundärdichtlippe wird dabei insbesondere von ihrem Ansatz an den sonstigen Bestandteilen des Dichtrings, insbesondere dem Haltebereich, bis zu ihrem distalen Ende bemessen. Eine Erstreckung in positiver Richtung kann bedeuten, dass sich die Primärdichtlippe und/oder die Sekundärdichtlippe von ihrem Ansatz an dem Dichtring radial nach außen von dem Mittelpunkt des Dichtrings bzw. der Axialrichtung bzw. der Mittelachse des Dichtrings wegerstreckt. Insbesondere kann ein distales Ende der Primärdichtlippe und/oder der Sekundärdichtlippe weiter von dem Mittelpunkt des Dichtrings bzw. der Axialrichtung entfernt sein, als der Ansatz der Primärdichtlippe und/oder der Sekundärdichtlippe.

Die Primärdichtlippe kann das distale Ende des Dichtrings in einer ersten Richtung, insbesondere in Radialrichtung, darstellen, und/oder die Sekundärdichtlippe kann das Ende des Dichtrings in einer zweiten Richtung, insbesondere in einer zu der ersten Richtung im Wesentlichen senkrechten, vorzugsweise zu der Axialrichtung parallelen Richtung, darstellen und/oder sich bis zu dem Ende des Dichtrings in der zweiten Richtung erstrecken. Beispielsweise kann die Primärdichtlippe dazu ausgestaltet sein, das Eindringen von Fremdkörpern, insbesondere von Schmutz und/oder Wasser, in einen Innenraum, z.B. einer Radnabe und/oder eines Rads, zu verhindern. Die Sekundärdichtlippe kann dazu ausgebildet sein, insbesondere bei einem Druck in dem Innenraum, welcher unterhalb eines vorbestimmten Schwellendrucks liegt, das Eindringen von Fremdkörpern, insbesondere von Schmutz und/oder Wasser, in den Innenraum zu verhindern. Darüber hinaus kann die Sekundärdichtlippe dazu ausgebildet sein, bei einem Überdruck in dem Innenraum oberhalb des vorbestimmten Schwellendrucks, durch flexibles Zurückbiegen einen Druckablass zu ermöglichen. Das Zurückbiegen der Sekundärdichtlippe kann insbesondere durch den Druck in dem Innenraum bedingbar sein. Mit anderen Worten kann die Sekundärdichtlippe dazu ausgebildet sein, bei Normaldruck eine Abdichtung zu bewirken und bei Überschreiten eines Druckschwellenwerts einen Überdruckausgleich durch flexibles Zurückbiegen zu ermöglichen. Die Abdichtwirkung der Primärdichtlippe und/oder der Sekundärdichtlippe kann insbesondere durch Anliegen der Primärdichtlippe und/oder der Sekundärdichtlippe an einer Fläche, z.B. einer Nabenkappe und/oder einer Radnabe, erzielbar sein. Vorteilhafterweise kann der erfindungsgemäße Dichtring z.B. dazu einsetzbar sein, einerseits ein Eindringen von Schmutz und/oder Wasser zu verhindern, insbesondere durch die Primärdichtlippe, und andererseits, falls erforderlich, eine Entlüftung eines Überdrucks, z.B. eines Leckagedrucks, aus einem Innenraum, insbesondere durch die Sekundärdichtlippe, zu ermöglichen. Alle Vorteile und Merkmale des Nabenkappensystems, des Fahrzeugs und des Verfahrens können analog auf den Dichtring übertragen werden und umgekehrt.

Vorteilhafterweise kann die Primärdichtlippe und/oder die Sekundärdichtlippe sich vom Haltebereich aus erstrecken. Mit anderen Worten kann die Primärdichtlippe und/oder die Sekundärdichtlippe direkt an den Haltebereich anschließen. Dies kann eine besonders einfache und kompakte Bauweise des Dichtrings bedingen.

Vorteilhafterweise kann die Primärdichtlippe und/oder die Sekundärdichtlippe und/oder der Haltebereich und/oder der Dichtring aus Gummi und/oder aus einem Kunststoff, insbesondere zu einem überwiegenden Teil, ausgebildet sein. Vorteilhafterweise kann der Dichtring vollständig aus Gummi und/oder aus einem Kunststoff ausgebildet sein. Zu einem überwiegenden Teil kann hierbei bedeuten, dass der Dichtring z.B. eine, insbesondere äußere, Schutzschicht und/oder einen Einschluss und/oder einen äußeren Zusatz aus einem anderen Material umfasst. Alternativ oder zusätzlich kann der Dichtring eine Beimischung aus einem anderen Material umfassen. Zu einem überwiegenden Teil kann insbesondere bedeuten, dass der Dichtring zu mehr als 50 Prozent, bevorzugt zu mehr als 80 Prozent, aus Gummi und/oder aus einem Kunststoff ausgebildet ist. Bei einer Beigabe anderer Materialien, sodass der Dichtring zu über 50 Prozent aus Gummi und/oder aus einem Kunststoff besteht kann der Dichtring eine besonders gute Stabilität und/oder einen besonders guten Schutz vor Umwelteinflüssen aufweisen. Eine Ausbildung aus über 80 Prozent Gummi und/oder aus einem Kunststoff kann eine besonders gute Elastizität und/oder Dichtigkeit des Dichtrings ermöglichen. Eine vollständige Ausbildung aus Gummi und/oder aus einem Kunststoff kann darüber hinaus eine relativ preiswerte und/oder einfache Herstellung ermöglichen.

Vorteilhafterweise kann zwischen der Sekundärdichtlippe und dem Haltebereich ein Aufnahmeraum vorgesehen sein, wobei der Aufnahmeraum insbesondere rotationssymmetrisch um die Axialrichtung umlaufend ausgebildet ist. Der Aufnahmeraum kann vorzugsweise eine Aussparung oder ein Rücksprung sein, insbesondere an einer Seite des Dichtrings, deren Normale in Axialrichtung verläuft. Die Aussparung bzw. der Rücksprung kann dazu ausgebildet sein, zusammen mit der Sekundärdichtlippe und mit einer Fläche, an der die Sekundärdichtlippe im installierten Zustand anliegt bzw. an der die Sekundärdichtlippe bei Normaldruck anliegt, einen nach außen abgeschlossenen Raum auszubilden, wobei der Raum eine Verbindung in einen durch den Dichtring abgedichteten Innenraum aufweisen kann. Der Aufnahmeraum bzw. die Aussparung bzw. der Rücksprung kann in einer Richtung quer zu der Axialrichtung und quer zu der Radialrichtung ein rundes, insbesondere halbkreisförmiges, Querschnittsprofil aufweisen. Der Aufnahmeraum kann insbesondere zumindest abschnittsweise, bevorzugt vollständig, an die Erstreckung der Sekundärdichtlippe angrenzen. Durch das Volumen des Aufnahmeraums kann insbesondere erzielt werden, dass der Druck möglichst gleichmäßig, insbesondere in Umlaufrichtung des Dichtrings gesehen, auf die Sekundärdichtlippe wirkt. Zusätzlich oder alternativ kann ermöglicht werden, dass der Druck auf die gesamte Erstreckung der Sekundärdichtlippe oder zumindest auf einen Großteil der Erstreckung der Sekundärdichtlippe wirkt. Vorteilhafterweise kann der Aufnahmeraum insbesondere eine besonders zuverlässige Druckausgleichsfunktion der Sekundärdichtlippe ermöglichen. Eine, insbesondere rotationssymmetrische, Ausbildung umlaufend um den Dichtring kann darüber hinaus eine besonders einfache Fertigung bedingen.

Vorteilhafterweise kann die Primärdichtlippe die Sekundärdichtlippe in Radialrichtung überragen. Mit Vorteil kann die Sekundärdichtlippe somit radial außen bzw. an einem distalen Ende in positiver Radialrichtung eine Abdichtung bewirken. Beispielsweise kann der Dichtring für eine Nabenkappe, welche einen Montagebereich und/oder sich in Axialrichtung erstreckende Einrastelemente zum Eingreifen in eine Radnabe aufweist, verwendet werden, indem der Dichtring in Radialrichtung zwischen einem äußeren Teil der Radnabe und dem Montagebereich bzw. den Einrastelementen angeordnet ist. Damit kann die Primärdichtlippe durch ihre radiale Position einen Innenraum der Radnabe bzw. des Rads abdichten. Die Sekundärdichtlippe kann hingegen die Funktion eines Druckablassventils mittels einer elastischen Ausgestaltung übernehmen.

Vorteilhafterweise kann/können die Primärdichtlippe und/oder die Sekundärdichtlippe sich in Axialrichtung und in die Radialrichtung erstrecken. Mit anderen Worten kann/können die Primärdichtlippe und/oder die Sekundärdichtlippe sich schräg zu der Axialrichtung und zu der Radialrichtung erstrecken. Diese Art der Erstreckung kann es für die Primärdichtlippe ermöglichen, dass sie besonders gut abdichtend an einer Fläche, z.B. einer Radnabe, anliegen kann. Die Sekundärdichtlippe kann durch diese Art der Erstreckung besonders gut für das Ablassen von Überdruck eingesetzt werden, insbesondere wenn sie an einer Fläche anliegt, deren Normale parallel zu der Axialrichtung verläuft, wobei sie unterhalb eines vorbestimmten Druckwerts abdichtend an der Fläche anliegen kann. Vorteilhafterweise kann die Primärdichtlippe und/oder die Sekundärdichtlippe sich im Wesentlichen gleichermaßen in Axialrichtung und in Radialrichtung erstrecken, wobei "im Wesentlichen" eine Abweichung von maximal 10 Prozent von einer gleichartigen Erstreckung in diese beiden Richtungen bedeuten kann. Es hat sich herausgestellt, dass eine derartige gleichmäßige Ausgestaltung einerseits eine besonders gute Abdichtwirkung erzielen kann und andererseits ein Öffnen eines Entlüftungswegs durch elastisches Verbiegen der Sekundärdichtlippe mit einer nur geringen Verbiegung, insbesondere geringer im Vergleich mit einer nicht schrägen Ausrichtung, erzielt werden kann.

Vorteilhafterweise kann es vorgesehen sein, dass die Primärdichtlippe und die Sekundärdichtlippe gleichgerichtet erstreckend ausgebildet sind. Mit anderen Worten können die Haupterstreckungsrichtungen der Primärdichtlippe und der Sekundärdichtlippe parallel zueinander ausgerichtet sein. Dies kann eine besonders einfache und gleichzeitige für eine Abdichtung effektive Ausführungsform darstellen.

Vorteilhafterweise kann der Haltebereich eine Bodenfläche aufweisen, wobei die Bodenfläche vorzugsweise koaxial zur Axialrichtung und/oder vorzugsweise der Mittelachse des Dichtrings zugewandt ist, wobei in der Bodenfläche vorteilhafterweise ein um die Axialrichtung umlaufender Kanal ausgebildet sein kann. Der Kanal kann vorzugsweise im Querschnitt halbkreisförmig ausgebildet sein und/oder einen entlang seines Verlaufs im Wesentlichen konstanten Querschnitt aufweisen. Die Bodenfläche kann gegenüberliegend der Seite des Dichtrings oder des Haltebereichs ausgebildet oder angeordnet sein, an die die Primärdichtlippe anschließt und/oder an die die Sekundärdichtlippe anschließt. Der Kanal kann vorteilhafterweise die Montage des Dichtrings erleichtern und/oder die Dichtwirkung des Dichtrings erhöhen. Der Kanal kann insbesondere dazu ausgelegt sein, mit einem durch den Dichtring abzudichtenden Innenraum in Fluidkontakt zu sein. Vorteilhafterweise kann die Luft in dem Kanal geführt werden und insbesondere von dem Kanal zu der Sekundärdichtlippe geleitet werden. Der Kanal kann somit eine besonders gleichmäßige und zuverlässige Entlüftung ermöglichen.

Vorteilhafterweise kann der Dichtring einen Durchbruch aufweisen. Der Durchbruch kann insbesondere dazu ausgebildet sein, einen Entlüftungsweg bzw. einen Luftweg von einem durch den Dichtring abgedichteten Innenraum zu der Sekundärdichtlippe bereitzustellen. Der Durchbruch kann zylinderförmig ausgebildet sein. Der Dichtring kann vorzugsweise mehrere Durchbrüche aufweisen, wobei die Durchbrüche insbesondere umlaufend gleichmäßig an dem Dichtring verteilt sind. Mit Vorteil kann der Durchbruch der Verbindung eines abgedichteten Innenraums mit der Sekundärdichtlippe und/oder eines Bereichs neben der Sekundärdichtlippe dienen.

Vorteilhafterweise kann der Durchbruch in die Bodenfläche und/oder den Kanal münden. Der Durchbruch kann so, insbesondere im Zusammenspiel mit dem Kanal, einer gezielten Leitung der Luft dienen, insbesondere um bei Überdruck in dem abgedichteten Innenraum einen Entlüftungsweg bereitzustellen.

Vorteilhafterweise kann der Durchbruch in den Aufnahmeraum münden. Der Durchbruch kann eine Fluidverbindung von dem Innenraum zu dem Aufnahmeraum ermöglichen. Mit Vorteil kann in diesem Fall der Aufnahmeraum eine gleichmäßige Verteilung der ggf. unter Druck stehenden Luft ermöglichen. Bei einem Überdruck, kann die Sekundärdichtlippe zur Freigabe eines Entlüftungswegs automatisch elastisch zurückbiegbar sein, wobei insbesondere durch die gleichmäßige Verteilung mittels des Aufnahmeraums die Freigabe zuverlässig einstellbar sein kann. Der so gestaltete Durchbruch kann damit eine Möglichkeit darstellen, durch den Dichtring selbst einen Entlüftungsweg bereitzustellen. Da es sich vorzugsweise nur um einen einzelnen Durchbruch bzw. nur um einige Durchbrüche handelt, wird dadurch insbesondere die Stabilität des Dichtrings nicht zu stark beeinträchtigt.

Vorteilhafterweise kann der Durchbruch sich in Axialrichtung und/oder in Radialrichtung erstrecken. Eine Erstreckung in Axialrichtung und in Radialrichtung kann vorteilhafterweise ermöglichen, dass beispielsweise Luft aus einem in Axialrichtung und/oder in Radialrichtung gesehen weiter innen gelegenen Bereich des abgedichteten Innenraums an einen in Axialrichtung und in Radialrichtung gesehen äußeren Bereich des Dichtrings geleitet werden kann. Des Weiteren kann eine Übertragung von Druckstößen aus dem Innenraum direkt an die Sekundärdichtlippe verhindert sein, wodurch eine gleichmäßigere Druckregulierung des Innenraums möglich sein kann.

Vorteilhafterweise kann/können die Primärdichtlippe und/oder die Sekundärdichtlippe vollständig um die Axialrichtung herum verlaufend ausgebildet sein. Insbesondere kann ein Querschnitt quer zu der Axialrichtung und der Radialrichtung der Primärdichtlippe und/oder der Sekundärdichtlippe konstant ausgebildet sein. Eine vollständige um die Axialrichtung herum verlaufenden Ausbildung kann eine einfache Fertigung ermöglichen. Zudem kann der Dichtring bzw. die Primärdichtlippe und/oder die Sekundärdichtlippe somit besonders mechanisch belastbar sein. Weiterhin kann durch ein vollständiges herum Verlaufen eine gleichmäßige Abgabe von Überdruck realisierbar sein.

Gemäß einem weiteren Aspekt ist ein Nabenkappensystem, insbesondere ein Nabenkappensystem wie hierin beschrieben, zur Befestigung an einer Radnabe eines Fahrzeugs, insbesondere Nutzfahrzeugs, vorgesehen, umfassend eine Nabenkappe und einen Dichtring wie hierin beschrieben. Ein Nutzfahrzeug im Sinne der Erfindung ist insbesondere ein Fahrzeug, welches ein zulässiges Gesamtgewicht von über 3,5 t, bevorzugt von über 7,5 t und besonders bevorzugt von über 18 t aufweist. Das Nutzfahrzeug kann insbesondere ein straßentaugliches und/oder ein straßengebundenes Fahrzeug sein. Bevorzugt kann ein solches Nutzfahrzeug ein Anhänger, insbesondere ein Sattelauflieger, sein. Alle Vorteile und Merkmale des Dichtrings können analog auf das Nabenkappensystem übertragen werden und umgekehrt. Der erfindungsgemäße Dichtring kann für die Entlüftung eines Innenraums der Radnabe bzw. eines Rads bei Überdruck dienen, insbesondere mittels der Sekundärdichtlippe, wobei der Dichtring gleichzeitig einen Schutz des Innenraums vor Schmutz und/oder Wasser bzw. anderen Flüssigkeiten bietet, insbesondere mit Hilfe der Primärdichtlippe und/oder der Sekundärdichtlippe.

Vorteilhafterweise kann die Nabenkappe einen Befestigungsbereich, insbesondere eine Nut, aufweisen, wobei der Befestigungsbereich vorteilhafterweise um die Axialrichtung bzw. Mittelachse des Dichtrings umlaufend ist, und/oder wobei optional der Befestigungsbereich vorteilhafterweise wegweisend von der Axialrichtung bzw. einer Mittelachse des Dichtrings ausgebildet ist, und wobei der Dichtring, insbesondere der Haltebereich des Dichtrings, an oder in dem Befestigungsbereich angeordnet ist. Wegweisend von der Axialrichtung kann dabei insbesondere bedeuten, dass der Befestigungsbereich auf einer in positive Radialrichtung gewandten Seite der Nabenkappe angeordnet ist. Der Befestigungsbereich, insbesondere die Nut, kann vorteilhafterweise der Stabilisierung der Anordnung des Dichtrings dienen bzw. bei der Installation die richtige Anordnung des Dichtrings sicherstellen bzw. erleichtern.

Vorteilhafterweise kann die Nabenkappe einen Innenraum aufweisen oder zumindest teilweise umschließen, wobei die Nabenkappe zumindest einen Verbindungsdurchbruch aufweist, wobei der Verbindungsdurchbruch den Durchbruch, den Kanal oder den Aufnahmeraum mit dem Innenraum verbindet. Der Verbindungsdurchbruch kann insbesondere als Luftdurchführung ausgebildet sein. Vorteilhafterweise kann somit durch den Verbindungsdurchbruch ein Entlüftungsweg vorgegeben werden, welcher bei elastischem Zurückbiegen der Sekundärlippe bei Überdruck in den Innenraum freigegeben wird. Bei einem Überdruck kann die Luft gezielt durch diesen Entlüftungsweg, d.h. durch den Verbindungsdurchbruch und - soweit vorhanden - optional durch den Durchbruch, den Kanal und/oder den Aufnahmeraum, strömen und somit für Entlüftung bei Überdruck sorgen. Herrscht kein Überdruck bzw. ist ein Druckschwellenwert nicht überschritten, d.h. insbesondere wenn eine Entlüftung nicht nötig ist, ist durch die Sekundärschutzlippe der Schutz des Innenraums gewährleistet.

Erfindungsgemäß kann die Sekundärdichtlippe an der Nabenkappe anliegen oder anlegbar sein. Dies stellt somit eine einfache Möglichkeit dar, bei der die Sekundärdichtlippe im angelegten Zustand den Innenraum schützen kann. Insbesondere kann die Sekundärdichtlippe dazu ausgebildet sein, bei Überschreiten eines vorbestimmten Druckwerts in dem Innenraum durch elastisches Wegbiegen von der Nabenkappe einen Entlüftungsweg zum Abbau des Drucks in dem Innenraum freizugeben und unterhalb des vorbestimmten Druckwerts durch Anliegen an der Nabenkappe den Entlüftungsweg zu versperren. Vorzugsweise kann die Sekundärdichtlippe an einer Fläche der Nabenkappe anliegen, wobei die die Normale der Fläche im Wesentlichen parallel zu der Axialrichtung ausgerichtet ist, wobei eine Abweichung von einer parallelen Ausrichtung insbesondere von maximal 10°, bevorzugt von maximal 5° als ein im Wesentlichen parallel verstanden werden kann. Dies stellt eine besonders effiziente Möglichkeit einer Regulierung des Drucks im Innenraum dar, wobei insbesondere die geometrischen Gegebenheiten der Anordnung zwischen Nabenkappe und Dichtring ausgenutzt werden. Vorteilhafterweise kann die Sekundärdichtlippe beim Anliegen derart orientiert sein, dass ein Berührungspunkt der Sekundärdichtlippe mit der Nabenkappe in Radialrichtung gesehen weiter von dem Mittelpunkt der Nabenkappe entfernt und/oder radial weiter außen angeordnet ist als ein Ansatz der Sekundärdichtlippe an dem Dichtring und/oder an dem Haltebereich des Dichtrings. Dies kann insbesondere einen schrägen Verlauf der Sekundärdichtlippe bedingen, was für eine Abdichtung und/oder ein Freigeben eines Entlüftungswegs besonders günstig sein kann.

Vorteilhafterweise kann/können der Dichtring und/oder die Nabenkappe derart ausgebildet sein, dass der auf einer Seite, insbesondere der Axialrichtung zugewandten Seite, der Sekundärdichtlippe anliegende Druck im Wesentlichen dem Druck im Innenraum der Nabenkappe entspricht. In anderen Worten kann ein Fluidfluss von der einen Seite der Sekundärdichtlippe zum Innenraum der Nabenkappe erfolgen, ohne dass das Fluid die Nabenkappe oder den Dichtring dazu verlassen muss bzw. verlässt. Der Druck, welcher auf die Sekundärdichtlippe wirkt, kann somit dem Druck im Innenraum entsprechen, womit eine direkte Kopplung des Verhaltens, insbesondere Öffnen und Schließens, der Sekundärdichtlippe an den Druck im Innenraum möglich ist.

Vorteilhafterweise kann die Nabenkappe Befestigungsmittel, insbesondere Befestigungsfinger, aufweisen zur Festlegung der Nabenkappe an einer Radnabe. Vorzugsweise kann der Dichtring und/oder der Befestigungsbereich im Bereich eines Anschlusses der Befestigungsmittel an die Nabenkappe angeordnet sein. Damit kann insbesondere ein besonders einfaches Verklemmen des Dichtrings und damit ein Abdichten durch den Dichtring erzielbar sein.

Gemäß einem weiteren Aspekt der Erfindung ist ein Radkappensystem umfassend eine Radnabe und ein Nabenkappensystem wie hierin beschrieben vorgesehen, wobei die Primärdichtlippe an der Radnabe anliegt oder anlegbar ist. Alle Vorteile und Merkmale des Dichtrings, des Nabenkappensystems, des Fahrzeugs sowie des Verfahrens können analog auf das Radkappensystem übertragen werden und umgekehrt.

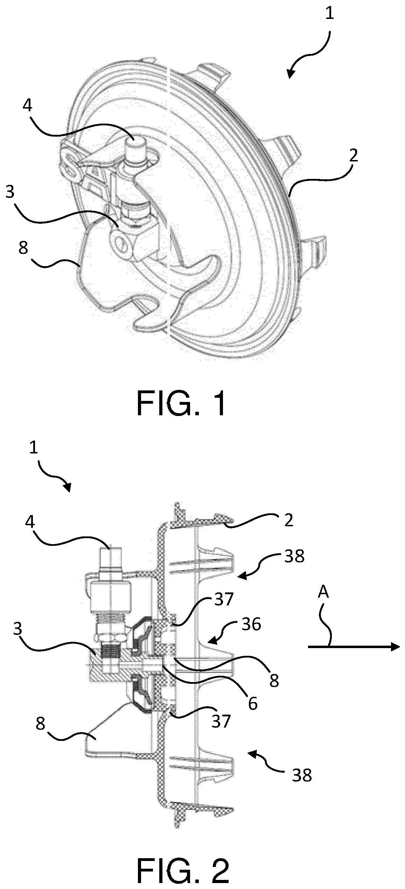

Einzelne der oben genannten Merkmale und Ausführungsformen können miteinander kombiniert werden und die den einzelnen Merkmalen zugeordneten Vorteile gelten auch für eine Kombination dieser Merkmale. Weitere Vorteile und Merkmale der Erfindung ergeben sich aus der nachfolgenden Beschreibung bevorzugter Ausführungsformen des erfindungsgemäßen Gegenstands mit Bezug auf die beigefügten Figuren. Die folgende Beschreibung dient lediglich der Verdeutlichung der Erfindung und sollte nicht derart aufgefasst werden, dass durch sie die beiliegenden Ansprüche auf eine der Ausführungsformen beschränkt werden. Die Figuren 1-11 und 17-30 zeigen jeweils nicht alle in den Ansprüchen definierten erfindungsgemäßen Merkmale. Es zeigen
- **Fig. 1**: eine Perspektivansicht eines Nabenkappensystems,
- **Fig. 2**: eine Schnittansicht des Nabenkappensystems gemäß der in Figur 1 gezeigten Ausführungsform,
- **Fig. 3**: eine Perspektivansicht eines Nabenkappensystem gemäß einer weiteren Ausführungsform,
- **Fig. 4**: eine Schnittansicht des Nabenkappensystems gemäß der in Figur 2 gezeigten Ausführungsform,
- **Fig. 5**: eine Perspektivansicht eines Nabenkappensystem gemäß einer weiteren Ausführungsform,
- **Fig. 6**: eine Schnittansicht des Nabenkappensystems gemäß der in Figur 5 gezeigten Ausführungsform,
- **Fig. 7**: eine Perspektivansicht eines Nabenkappensystem gemäß einer weiteren Ausführungsform,
- **Fig. 8**: eine Perspektivansicht eines Nabenkappensystem gemäß einer weiteren Ausführungsform,
- **Fig. 9**: eine Schnittansicht eines Nabenkappensystem gemäß einer weiteren Ausführungsform,
- **Fig. 10**: eine Perspektivansicht eines Nabenkappensystem gemäß einer weiteren Ausführungsform,
- **Fig. 11**: eine Schnittansicht des Nabenkappensystems gemäß der in Figur 10 gezeigten Ausführungsform,
- **Fig. 12**: eine seitliche Ansicht eines Luftführungssystems mit einem Teleskopmechanismus gemäß einer Ausführungsform der Erfindung,
- **Fig. 13**: eine Schnittansicht eines Nabenkappensystem gemäß einer weiteren Ausführungsform der Erfindung,
- **Fig. 14**: eine weitere Schnittansicht des Nabenkappensystems gemäß der in Figur 13 gezeigten Ausführungsform der Erfindung,
- **Fig. 15**: eine Schnittansicht eines Nabenkappensystem gemäß einer weiteren Ausführungsform der Erfindung,
- **Fig. 16**: eine weitere Schnittansicht des Nabenkappensystems gemäß der in Figur 13 gezeigten Ausführungsform der Erfindung,
- **Fig. 17**: eine Schnittansicht eines Nabenkappensystems gemäß einer weiteren Ausführungsform,
- **Fig. 18**: eine weitere Schnittansicht des Nabenkappensystems gemäß der in Figur 17 gezeigten Ausführungsform,
- **Fig. 19**: eine Schnittansicht eines Nabenkappensystems gemäß einer weiteren Ausführungsform,
- **Fig. 20**: eine weitere Schnittansicht des Nabenkappensystems gemäß der in Figur 19 gezeigten Ausführungsform,
- **Fig. 21**: eine Schnittansicht eines Nabenkappensystems gemäß einer weiteren Ausführungsform,
- **Fig. 22**: eine weitere Schnittansicht des Nabenkappensystems gemäß der in Figur 21 gezeigten Ausführungsform,
- **Fig. 23**: eine schematische Seitenansicht eines Fahrzeugs gemäß einer Ausführungsform der Erfindung.
- **Fig. 24**: eine Schnittansicht eines Nabenkappensystems gemäß einer Ausführungsform,
- **Fig. 25**: eine Schnittansicht eines Dichtrings, der an einer Nabenkappe angeordnet ist, gemäß einer ersten Ausführungsform,
- **Fig. 26**: eine vergrößerte Schnittansicht eines Dichtrings, der an einer Nabenkappe angeordnet ist, gemäß einer ersten Ausführungsform,
- **Fig. 27**: eine Schnittansicht eines Dichtrings, der an einer Nabenkappe angeordnet ist, gemäß einer zweiten Ausführungsform,
- **Fig. 28**: eine vergrößerte Schnittansicht eines Dichtrings, der an einer Nabenkappe angeordnet ist, gemäß der zweiten Ausführungsform,
- **Fig. 29**: eine Perspektivansicht eines Nabenkappensystems gemäß einer weiteren Ausführungsform und
- **Fig. 30**: eine Schnittansicht des Nabenkappensystems gemäß der in Figur 29 gezeigten Ausführungsform.

**Figur 1** zeigt ein Nabenkappensystem 1. Das Nabenkappensystem 1 umfasst eine Nabenkappe 2 und ein Luftführungssystem 3, wobei das Luftführungssystem 3 insbesondere eine Drehdurchführung ist. In Figur 1 ist ein Sekundäranschluss 4 des Luftführungssystems 3 zu sehen, welcher insbesondere zum Anschluss einer zu einem Reifen führenden Druckluftleitung vorgesehen ist. Weiterhin umfasst das Nabenkappensystem 1 ein Kragenelement 8, welches das Luftführungssystem 3 abschnittsweise umgibt. Das Kragenelement 8 dient dem Schutz des Luftführungssystems 3. Das Kragenelement 8 weist eine variable Erstreckung auf, wobei in einem lokalen Minimum der Erstreckung des Kragenelements 8 der Sekundäranschluss 4 des Luftführungssystems 3 angeordnet ist.

**Figur 2** zeigt eine Schnittansicht eines Nabenkappensystems 1, welche auch in Figur 1 gezeigt sein könnte. Das Kragenelement 8 überragt das Luftführungssystem 3 in Axialrichtung leicht und bildet dadurch einen Schutz für das Luftführungssystem 3. Ein Primäranschluss 8 des Luftführungssystems 3 ist innerhalb eines Zentraldurchbruchs 32 der Radkappe 2 angeordnet. Die Nabenkappe 2 umfasst einen Montagekörper 38 zur Anbindung an eine Radnabe sowie einen Zentralkörper 36. Der Montagekörper 38 und der Zentralkörper 36 sind aneinander mittels eines Befestigungsmittels 37 fixiert, welches eine Rastnase des Montagekörpers 38 ist. Das Befestigungsmittel 37 des Montagekörpers 38 greift in eine Ausnehmung des Zentralkörpers 36 ein. Sowohl das Befestigungsmittel 37 als auch die Ausnehmung sind umlaufend ausgebildet. Der Zentralkörper 36 umfasst weiterhin den Zentraldurchbruch 32, in welchem das Luftführungssystem 3 teilweise angeordnet ist.

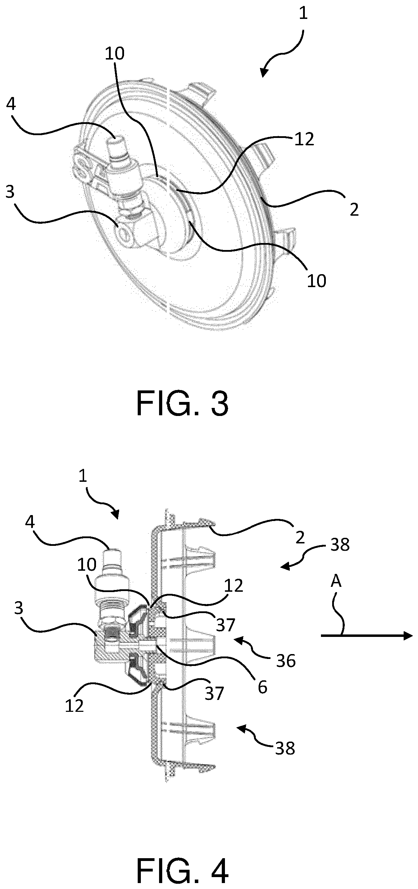

Die **Figuren 3** und **4** zeigen ein Nabenkappensystem 1 gemäß einer weiteren Ausführungsform. Das Nabenkappensystem 1 weist kein Kragenelement 8 auf. Es ist jedoch optional auch möglich, dass in dieser Ausführungsform - sowie in allen weiteren gezeigten Ausführungsformen - ein Kragenelement 8 vorgesehen sein kann. Das Nabenkappensystem 1 umfasst mehrere Rastfinger 10, insbesondere vier Rastfinger 10, welche Teil des Luftführungssystems 3 sind und welche in eine entsprechende Hinterschneidung der Nabenkappe 2 eingreifen. Eine entsprechende Befestigung kann auch in der Ausführungsform, welche in Figur 1 gezeigt ist, vorgesehen sein. Die anderen Merkmale dieser Ausführungsform entsprechen im Wesentlichen derjenigen Ausführungsform, die in den Figuren 1 und 2 gezeigt ist.

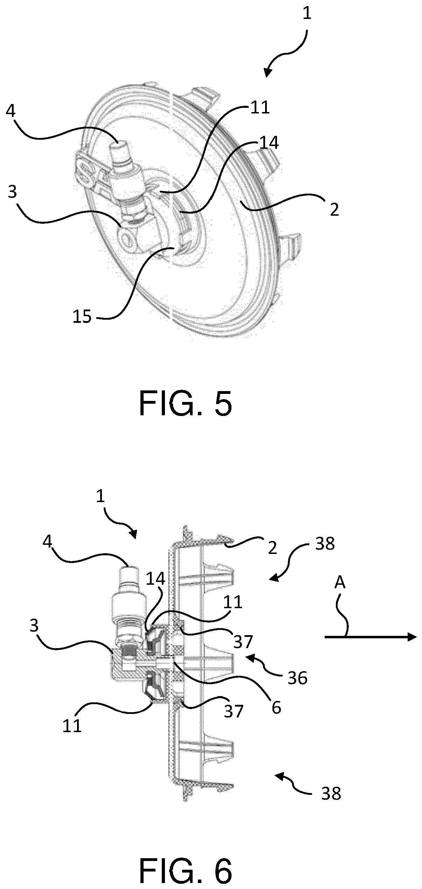

Die **Figuren 5** und **6** zeigen ein Nabenkappensystem 1, bei dem das Luftführungssystem 3 mittels eines Adapterelements 14 an der Nabenkappe 2 befestigt ist. Das Adapterelement 14 ist mittels Rastfingern 11 der Nabenkappe 2 an der Nabenkappe 2 fixiert. Die Rastfinger 11 der Nabenkappe 2 fixieren das Adapterelement 14, indem sie um das Adapterelement 14 herumgreifen und das Adapterelement 14 durch Verspannen mit einer Fläche 15 des Adapterelements fixieren. In dieser Ausführungsform ist das Luftführungssystem 3 in das Adapterelement 14 hineingeschraubt. Es ist aber zum Beispiel auch möglich, dass das Luftführungssystem 3 in das Adapterelement 14 hineingeklemmt oder zum Beispiel mittels einer Rastnase in dem Adapterelement 14 befestigt ist.

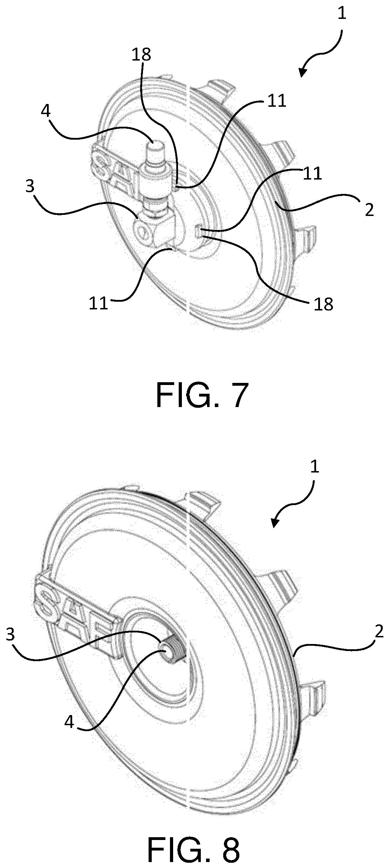

**Figur 7** zeigt ein Nabenkappensystem 1, wobei das Luftführungssystem 3 mehrere Einrastpositionen 18 aufweist, z.B. vier Einrastpositionen 18, welche radial gleichmäßig an dem Luftführungssystem 3 verteilt sind. Die Einrastpositionen 18 bestehen aus sich in Axialrichtung A erstreckende Durchbrüche in dem Luftführungssystem 3. In diese Einrastpositionen 18 greifen mehrere Rastfinger 11 der Nabenkappe 2 ein, um somit das Luftführungssystem 3 an seiner Position zu fixieren. Durch das Vorsehen von vier symmetrisch angeordneten Einrastpositionen 18 gibt es genau vier Positionen bzw. vier Drehpositionen, in denen das Luftführungssystem 3 an der Nabenkappe 2 fixiert werden kann.

**Figur 8** zeigt ein Nabenkappensystems 1, wobei das Luftführungssystem 3 in einer Vertiefung der Nabenkappe 2 angeordnet, so dass das Luftführungssystem 3 in Axialrichtung A nicht über die Nabenkappe 2 hinausragt. Der Sekundäranschluss 4 ist in Axialrichtung A ausgerichtet, so dass ein Anschluss an den Sekundäranschluss 4 in Axialrichtung A erfolgen kann.

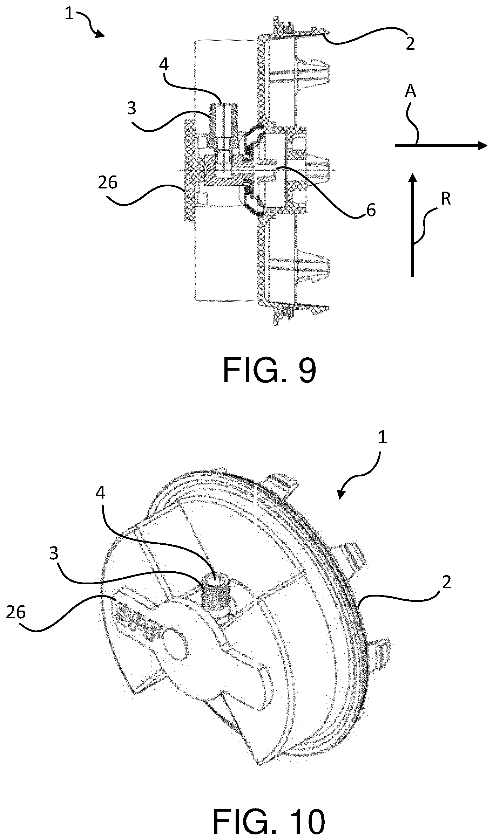

In der **Figur 9** ist eine Schnittansicht eines Nabenkappensystems 1 gezeigt. Das Luftführungssystem 3 ist ebenfalls in einer Vertiefung der Nabenkappe 2 angeordnet, wobei der Sekundäranschluss 4 des Luftführungssystems 3 in Radialrichtung R orientiert ist. Die Vertiefung der Nabenkappe 2 erstreckt sich vollständig über den gesamten Bereich der Nabenkappe 2 in Radialrichtung R. Somit ist ein Anschluss einer Fluidleitung an den Sekundäranschluss 4 in Radialrichtung R relativ einfach möglich. Das Nabenkappensystem 1 umfasst weiterhin ein Schutzelement 26 in Form einer Schutzkappe. Dieses Schutzelement 26 stellt den in Axialrichtung A gesehenen distalen Endbereich der Nabenkappe 2 auf der linken Seite dar. Das Schutzelement 26 bietet so in Axialrichtung A zusätzlichen Schutz für das Luftführungssystem 3.

In **Figur 10** ist ein Nabenkappensystem 1 gezeigt. In diesem Ausführungsbeispiel ist das Luftführungssystem 3 ebenfalls in einer Vertiefung der Nabenkappe 2 angeordnet und wird ebenfalls durch ein Schutzelement 26 geschützt. Die Vertiefung ist kreissegmentartig ausgeformt, wodurch die Vertiefung einerseits einen guten Schutz für das Luftführungssystem 3 bietet, gleichzeitig durch die nach außen offene Gestaltung aber auch eine gute Anschlussmöglichkeit an das Luftführungssystem 3 ermöglicht. Weiterhin kann diese Vertiefung dazu verwendet werden, beispielsweise mit einem Werkzeug in die Nabenkappe 2 einzugreifen, um die Nabenkappe 2 beispielsweise gegenüber einer Radnabe zu verdrehen.

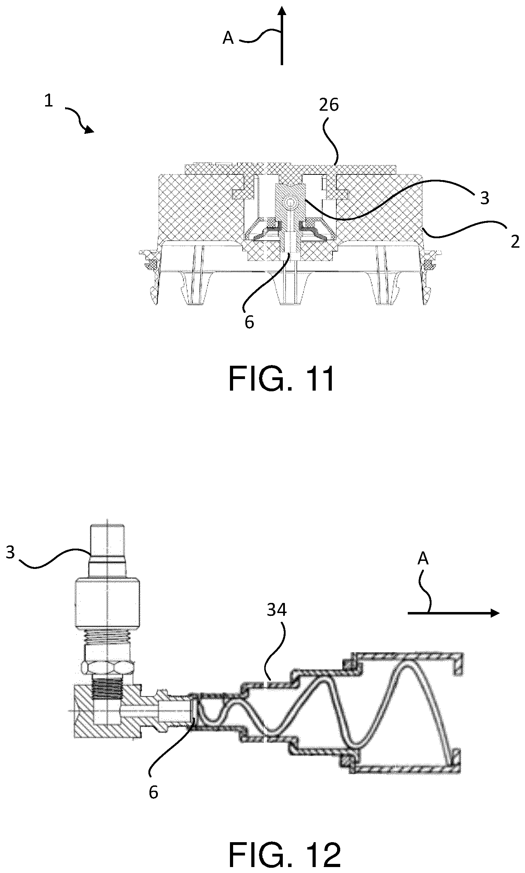

**Figur 11** zeigt eine Schnittansicht des Nabenkappensystems 1, wie es auch in Figur 10 gezeigt ist. Das Schutzelement 26 ist, mittels Rastnasen in seitlichen Ausnehmungen der Nabenkappe 2 fixiert.

**Figur 12** zeigt ein Luftführungssystem 3 mit einem Teleskopmechanismus 34, mittels dessen das Luftführungssystem 3 in Axialrichtung A verlagerbar bzw. ein- und ausziehbar ist. Das Luftführungssystem 3 kann dabei verlagert werden, indem der Teleskopmechanismus 34 bzw. die einzelnen Bestandteile des Teleskopmechanismus 34 zusammengeschoben bzw. auseinandergezogen werden.

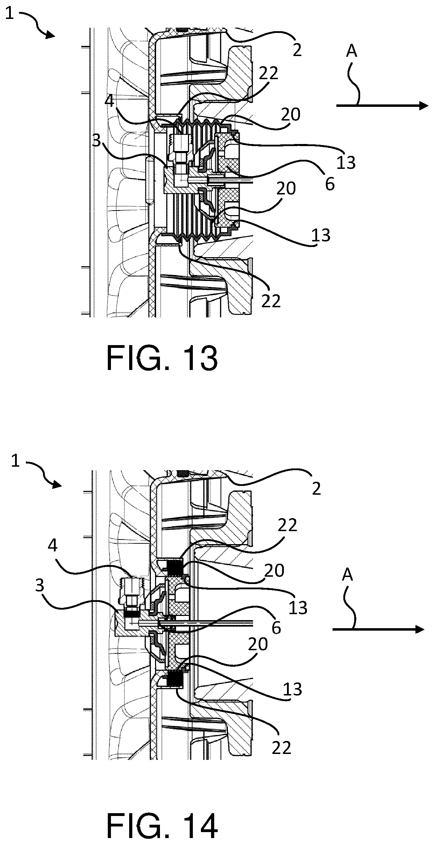

Die **Figuren 13 und 14** zeigen jeweils eine Schnittansicht eines Nabenkappensystems 1, welches eine Faltenbalgvorrichtung 20 umfasst, welche in der Figur 13 ausgefahren und in der Figur 14 zusammengefahren ist. Ist die Faltenbalgvorrichtung 20 ausgefahren, so befindet sich das Luftführungssystem 3 vollständig innerhalb der Nabenkappe 2 und ist somit vor äußeren Einflüssen gut geschützt. Diese Positionierung kann insbesondere verwendet werden, um das Nabenkappensystem 1 vor der Installation zu transportieren, um Schäden an dem Luftführungssystem 3 zu vermeiden. In der in Figur 14 ist das Luftführungssystem 3 hingegen, insbesondere in Axialrichtung A, ausgefahren. Die Faltenbalgvorrichtung 20 greift dabei, um das Luftführungssystem 3 verlagern zu können, in eine Hinterschneidung 13 des Luftführungssystems 3 ein. Weiterhin kann die Faltenbalgvorrichtung 20 in ihrer Position fixiert werden, indem sie mittels eines Hakenelements 22 in ihrer Position fixiert ist. Das Hakenelement 22 kann vollständig umlaufend um die Faltenbalgvorrichtung 20 angeordnet sein. Sie kann aber zum Beispiel auch einzelne Stäbe bzw. Haken umfassen, die in die Faltenbalgvorrichtung 20 eingreifen.

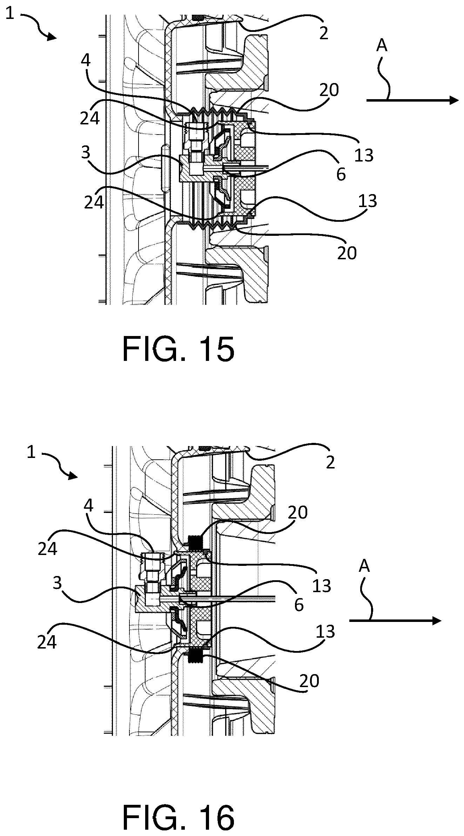

Die **Figuren 15** und **16** zeigen eine Schnittansicht eines Nabenkappensystems 1, welches ebenfalls eine Faltenbalgvorrichtung 20 aufweist, womit das Luftführungssystem 3 in Axialrichtung A verlagerbar ist. In Figur 16 ist das Luftführungssystem 3 in seiner ausgefahrenen Position gezeigt, in welcher die Faltenbalgvorrichtung 20 komplett zusammengezogen ist. Das Luftführungssystem 3 ist mittels Rastnasen 24, welche an einer äußeren Fläche der Nabenkappe 2 eingreifen, fixierbar.

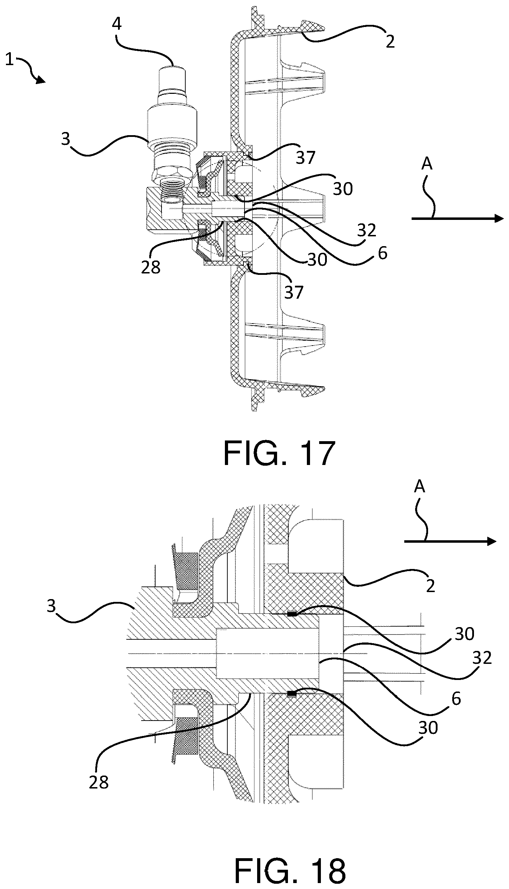

Die **Figuren 17** und **18** zeigen ein Nabenkappensystem 1, wobei das Luftführungssystem 3 mittels Befestigungselementen in dem Zentraldurchbruch 32 der Nabenkappe 2 befestigt ist. Das Luftleitungsrohr 28 ist dabei in ein Teil des Luftführungssystems 3. Sowohl die Nabenkappe 2 in dem Zentraldurchbruch 32 als auch das Luftführungssystem 3 außen an seinem Luftleitungsrohr 28 weisen jeweils eine umlaufende Nut auf, mittels derer das Luftführungssystem 3 mit Hilfe von einem Sprengring 30, der innerhalb dieser Nuten verläuft, an der Nabenkappe 2 fixiert ist. Alternativ wäre auch ein Klippmechanismus oder ein Rastmechanismus zur Befestigung in dem Zentraldurchbruch 32 denkbar. Auch wäre es denkbar, einen kleinen Adapter vorzusehen, welcher eine entsprechende Aufgabe der Befestigung in dem Zentraldurchbruch 32 übernimmt.

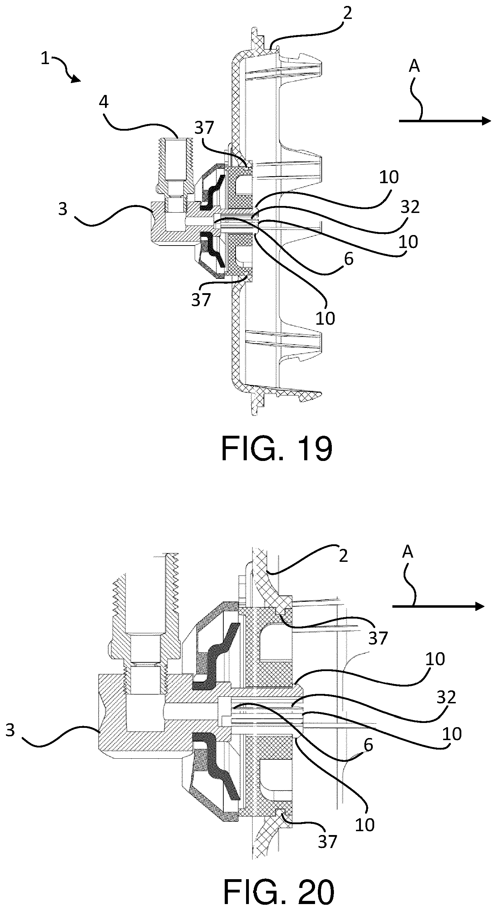

Die **Figuren 19** und **20** zeigen eine Schnittansicht eines Nabenkappensystems 1, wobei das Luftführungssystem 3 mehrere Rastfinger 10 aufweist, welche sich durch den Zentraldurchbruch 32 erstrecken und um die Fläche der Radnabe an der Mündung des Zentraldurchbruchs 32 greifen. Dadurch wird das Luftführungssystem 3 an der Nabenkappe 2 fixiert.

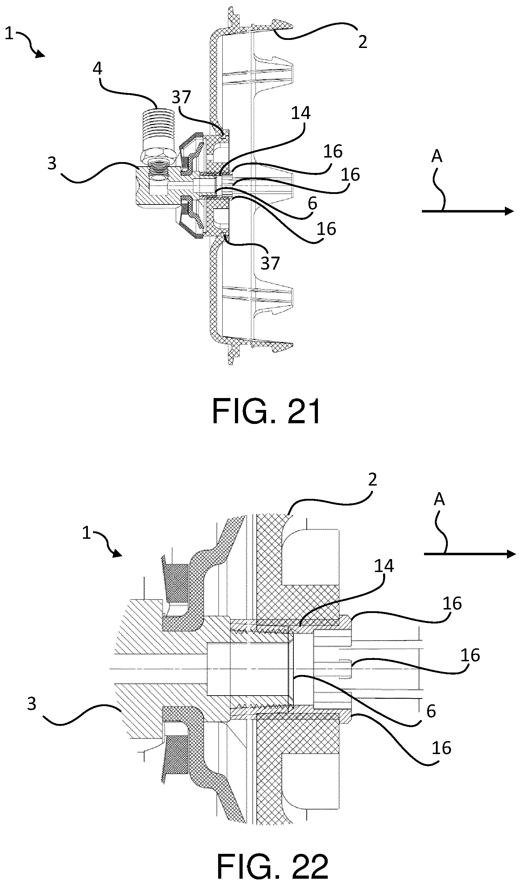

Die **Figuren 21** und **22** zeigen eine weitere Schnittansicht eines Nabenkappensystems 1, wobei das Nabenkappensystem 1 ein Adapterelement 14 umfasst, welches als Dübel-artiger Mechanismus ausgebildet ist. Der Dübel-artige Mechanismus umfasst mehrere Rastfinger 16, welche das Adapterelement 14 mit der Radkappe 2 verspannen, insbesondere indem sie in eine Fläche an der Mündung des Zentraldurchbruchs 32 der Nabenkappe 2 eingreifen. Das Luftführungssystem 3 ist in das Adapterelement 14 hineingeschraubt und drückt die Rastfinger 16 des Adapterelements 14 nach außen, wodurch die Rastfinger 16 insbesondere mit dem Zentraldurchbruch 32 verspannt sind. Insbesondere kann es hier vorgesehen sein, dass das Adapterelement 14 bei der Installation zunächst in den Zentraldurchbruch 32 eingeführt wird, und dann durch Einschrauben des Luftführungssystems 3 mit der Nabenkappe 2 verspannt wird.

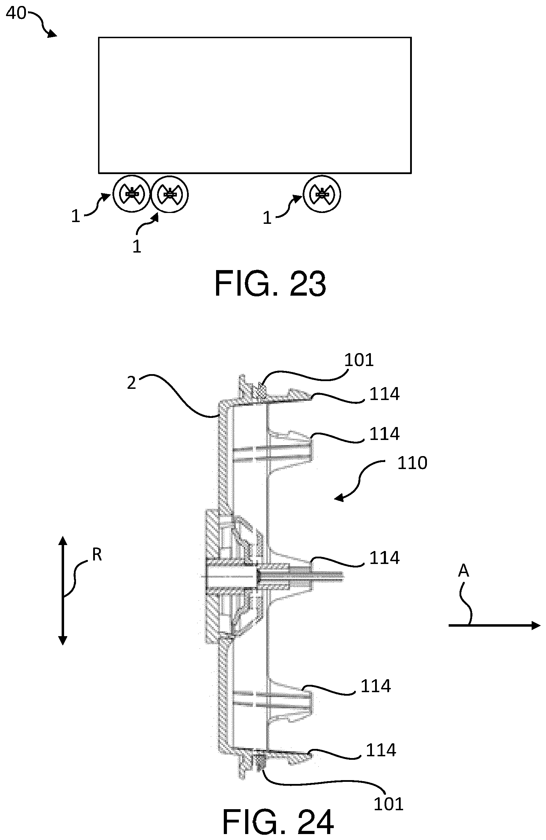

**Figur 23** zeigt ein Fahrzeug 40, wobei dieses Fahrzeug 40 mehrere Nabenkappensysteme 1 an seinen Rädern umfasst. Das Fahrzeug 40 ist in diesem Fall ein Anhänger. Das Nabenkappensystem 1 entspricht insbesondere der in Figur 10 gezeigten Ausführungsform. Auch eine Kombination aus verschiedenen Ausführungsformen von Nabenkappensystemen an verschiedenen Rädern und/oder Achsen des Fahrzeugs 40 ist denkbar.

**Figur 24** zeigt eine Schnittansicht eines Nabenkappensystems mit einem Dichtring 101 und einer Nabenkappe 2 gemäß einer Ausführungsform. Der Dichtring 101 ist umlaufend um die Nabenkappe 2 angeordnet und hier wie auch in den folgenden Figuren im Querschnitt gezeigt. Die Nabenkappe 2 umfasst mehrere Befestigungsmittel 114 zum Verklemmen mit einer Radnabe. Durch Aufsetzen der Nabenkappe 2 auf die Radnabe kann ein Innenraum 110 gebildet werden, der mit Hilfe des Dichtrings 101 nach außen hin abgedichtet werden kann.

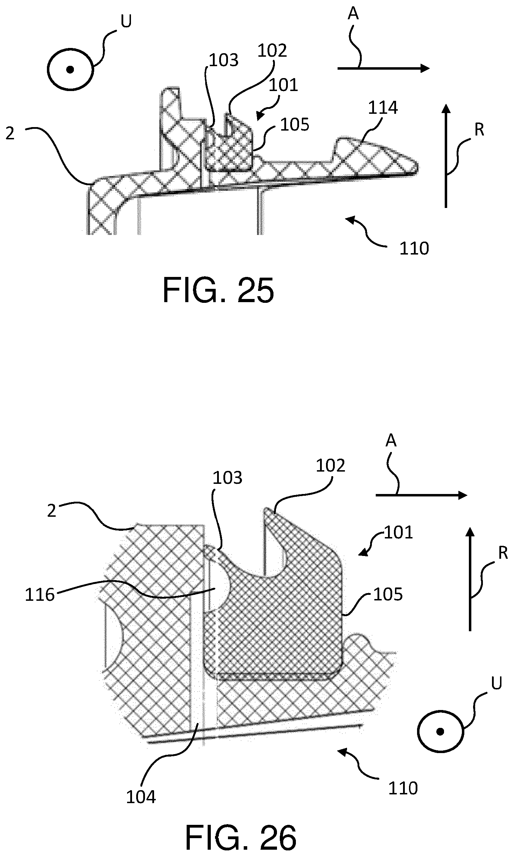

Die **Figuren 25 und 26** zeigen eine Schnittansicht eines Dichtrings 101, der an einer Nabenkappe 2 angeordnet ist, welche hier ausschnittsweise gezeigt ist, gemäß einer ersten Ausführungsform. Der Dichtring 101 umfasst eine Primärdichtlippe 102 zur Anlage an einer Radnabe und eine Sekundärdichtlippe 103, welche an der Nabenkappe 2 anliegt. Sowohl die Primärdichtlippe 102 als auch die Sekundärdichtlippe 103 schließen an den Haltebereich 105 des Dichtrings 101 an und erstrecken sich von dort sowohl in Axialrichtung A als auch in Radialrichtung R. Der Haltebereich 105 stellt in dieser Ausführungsform den Hauptteil des Dichtrings 101 dar und ist in einer Nut bzw. an einem Befestigungsbereich der Nabenkappe 2 angeordnet. Unterhalb der Primärdichtlippe 103 und eingeschlossen durch die Primärdichtlippe 103, den Haltebereich 105 und eine Seitenwand der Radnabe 2 ist ein Aufnahmeraum 116 angeordnet. Der Aufnahmeraum 116 ist mittels eines Verbindungsdurchbruchs 104 durch die Nabenkappe 2 mit dem durch die Nabenkappe 2 und eine Radnabe gebildeten Innenraum 110 fluidisch verbunden. Durch den Verbindungsdurchbruch 104 wird eine Luftleitung von dem Innenraum 110 zu dem Aufnahmeraum 116 bereitgestellt, wodurch insbesondere der Druck in dem Aufnahmeraum 116 im Wesentlichen dem Druck in dem Innenraum 110 entspricht. Überschreitet nun der Druck in dem Innenraum 110 einen vorbestimmten Maximaldruck, so wird die Sekundärdichtlippe 103 elastisch nach oben bzw. im Wesentlichen in positive Radialrichtung R weggebogen und es entsteht ein Entlüftungsweg über den Verbindungsdurchbruch 104, den Aufnahmeraum 116 sowie vorbei an der Sekundärdichtlippe 103. Über diesen Entlüftungsweg kann Luft aus dem Innenraum 110 nach außen gelangen, bis der Druck in dem Innenraum 110 nicht mehr über dem vorbestimmten Maximaldruck liegt. Sobald der Druck in dem Innenraum 110 nicht mehr über dem Maximaldruck liegt, schließt die Sekundärdichtlippe 103 wieder an die Nabenkappe 2 an und der Entlüftungsweg ist wieder geschlossen. In diesem Zustand können insbesondere aufgrund des Dichtrings 101 und aufgrund der Dichtlippen 102, 103 kein Schmutz und keine Flüssigkeiten in den Innenraum 110 gelangen.

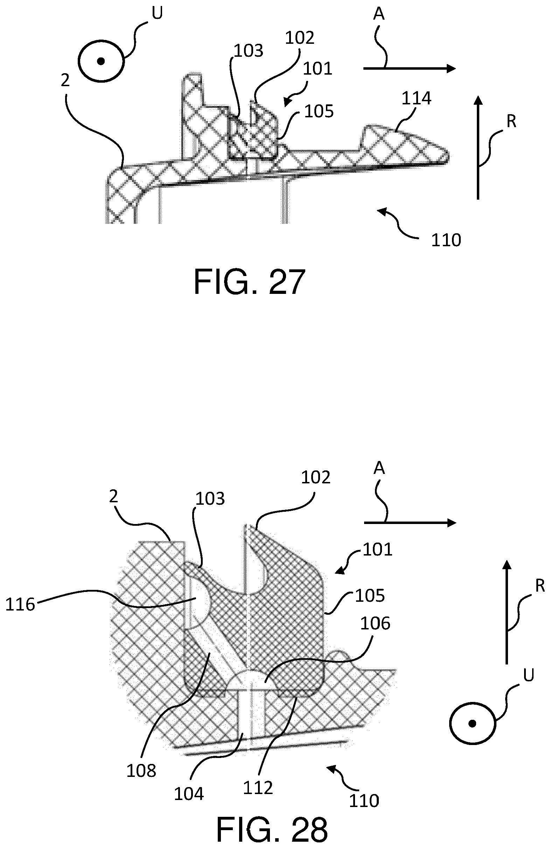

Die **Figuren 27 und 28** zeigen eine Schnittansicht eines Dichtrings 101, der an einer Nabenkappe 2 angeordnet ist, welche hier ausschnittsweise gezeigt ist. Auch in dieser Ausführungsform weist der Dichtring 101 eine Primärdichtlippe 102 und eine Sekundärdichtlippe 103 sowie einen Haltebereich 105 auf. Die Dichtlippe 101 weist in dieser Ausführungsform zudem in Umlaufrichtung U einen oder mehrere Durchbrüche 108 auf, von denen einer in dieser Schnittansicht zu sehen ist. Der Durchbruch 108 verläuft sowohl in Radialrichtung R als auch in Axialrichtung A. Er verbindet damit einen Kanal 106, welcher in einer Bodenfläche 112 des Dichtrings 101 angeordnet ist, mit dem Aufnahmeraum 116, der hier genauso ausgestaltet ist wie in der ersten Ausführungsform, die in den Figuren 25 und 26 gezeigt ist. Sowohl der Kanal 106 als auch der Aufnahmeraum 116 weisen in Umlaufrichtung U einen konstanten Querschnitt auf. Beide sind somit durchgehend ausgebildet und werden punktuell durch die Durchbrüche 108 verbunden. Zur Verbindung des Kanals 106 mit dem Innenraum 110 weist die Nabenkappe 2 zumindest einen Verbindungsdurchbruch 104 auf. Über den Verbindungsdurchbruch 104, den Kanal 106, den Durchbruch 108 sowie den Aufnahmeraum 116 kann ein Entlüftungsweg geöffnet werden, wenn die Sekundärdichtlippe 103 bei Überdruck in dem Innenraum 110 und damit auch in dem Aufnahmeraum 116 elastisch zurückgebogen wird. Unterhalb eines nominellen Druckwerts schließt die Sekundärdichtlippe hingegen durch Anliegen an die Nabenkappe 2, während die Primärdichtlippe 102 durch Anliegen an eine hier nicht gezeigte angeschlossene Radnabe ebenfalls den Innenraum 110 abdichtet. Damit kann der Dichtring 101 bei einem zusammengebauten System aus Nabenkappe 2, Radnabe und Dichtring 101 dafür sorgen, dass keine Fremdkörper von außen in die Radnabe bzw. in ein die Radnabe umfassendes Rad gelangen können.

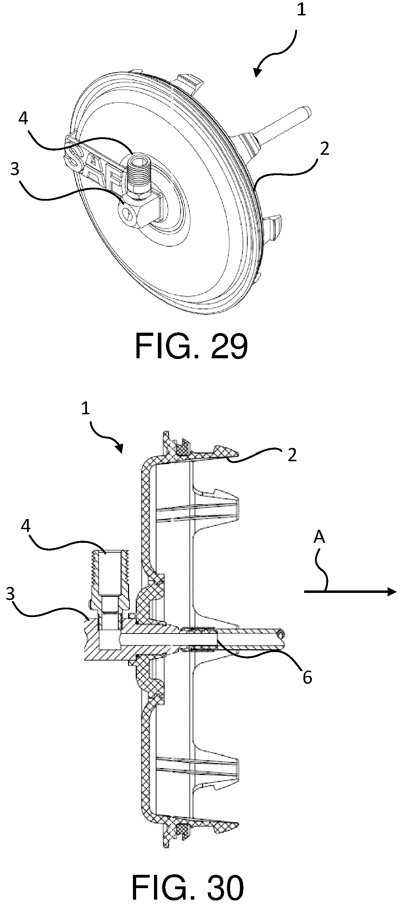

**Figur 29** zeigt ein Nabenkappensystem 1 gemäß einer weiteren Ausführungsform der Erfindung. **Figur 30** zeigt eine Schnittansicht des Nabenkappensystems in Figur 29. Das Nabenkappensystem 1 umfasst eine Nabenkappe 2 und ein Luftführungssystem 3, wobei das Luftführungssystem 3 insbesondere eine Drehdurchführung ist. Das Luftführungssystem 3 weist im Bereich des Sekundäranschlusses 4 ein Außengewinde auf. Die Nabenkappe 2 ist außen derart geformt sein, dass eine Verdrehung des Luftführungssystems 3 zu der Nabenkappe 2 verhindert ist. Weiterhin sind das Luftführungssystem 3 und die Nabenkappe 2 derart ausgestaltet, dass das Luftführungssystem 3 nur in einer von vier vorbestimmten Drehpositionen um die Axialrichtung A an der Nabenkappe 2 befestigt sein kann. Die vorbestimmten Drehpositionen weisen hier gleichmäßige Winkelabstände zueinander auf. Insbesondere ist eine Fixierung in der Position 0°, 90°, 180° und 270° vorgesehen. Das Luftführungssystem 3 umfasst dabei einen im Wesentlichen quadratischen Vierkant. Der Vierkant ist dazu ausgestaltet, von außen in die Nabenkappe eingesteckt zu werden bzw. eingesteckt zu sein. Die hier gezeigte Ausführungsform kann insbesondere mit einer der anderen Ausführungsformen zum Schutz des Luftführungssystems 3 kombiniert werden.

### Bezugszeichenliste:

- 1: Nabenkappensystem
- 2: Nabenkappe
- 3: Luftführungssystem
- 4: Sekundäranschluss
- 6: Primäranschluss
- 8: Kragenelement
- 10: Rastfinger des Luftführungssystems
- 11: Rastfinger der Nabenkappe
- 12: Hinterschneidung der Nabenkappe
- 13: Hinterschneidung des Luftführungssystems
- 14: Adapterelement
- 15: Fläche des Adapterelements
- 16: Rastfinger des Adapterelements
- 18: Einrastposition
- 20: Faltenbalgvorrichtung
- 22: Hakenelement
- 24: Rastnase
- 26: Schutzelement
- 28: Luftleitungsrohr
- 30: Sprengring
- 32: Zentraldurchbruch
- 34: Teleskopmechanismus
- 36: Zentralkörper
- 37: Befestigungsmittel für Zentral- und Montagekörper
- 38: Montagekörper
- 40: Fahrzeug
- 101: Dichtring
- 102: Primärdichtlippe
- 103: Sekundärdichtlippe
- 104: Verbindungsdurchbruch
- 105: Haltebereich
- 106: Kanal
- 108: Durchbruch
- 110: Innenraum
- 112: Bodenfläche
- 114: Befestigungsmittel
- 116: Aufnahmeraum
- A: Axialrichtung
- R: Radialrichtung
- U: Umlaufrichtung

## Patentansprüche

1. Nabenkappensystem (1) für ein Fahrzeug, insbesondere ein Nutzfahrzeug, umfassend eine Nabenkappe (2) und ein Luftführungssystem (3),
wobei die Nabenkappe (2) dazu ausgelegt ist, um eine Axialrichtung (A) zu rotieren,
wobei die Nabenkappe (2) einen Zentraldurchbruch (32) aufweist, welcher sich insbesondere in die Axialrichtung (A) erstreckt,
wobei das Luftführungssystem (3) einen Primäranschluss (6) und einen Sekundäranschluss (4) aufweist,
wobei das Luftführungssystem (3) sich teilweise in oder durch den Zentraldurchbruch (32) erstreckt,
**dadurch gekennzeichnet, dass** das Luftführungssystem (3) relativ zu der Nabenkappe in Axialrichtung (A), insbesondere translatorisch, verlagerbar und/oder ausziehbar ist.

2. Nabenkappensystem (1) gemäß dem Anspruch 1,
wobei das Luftführungssystem (3) reversibel mit der Nabenkappe (2) verbunden ist.

3. Nabenkappensystem (1) gemäß einem der vorhergehenden Ansprüche,
wobei das Luftführungssystem (3) formschlüssig an der Nabenkappe (2), insbesondere reversibel, festgelegt ist.

4. Nabenkappensystem (1) gemäß Anspruch 2 oder 3,
wobei das Luftführungssystem (3) und/oder die Nabenkappe (2) eine zumindest abschnittsweise um die Axialrichtung (A) umlaufende, insbesondere innere oder äußere, Hinterschneidung (13) umfasst,
und/oder
wobei die Nabenkappe (2) und/oder das Luftführungssystem (3) zumindest einen Rastfinger (11), insbesondere zum Eingreifen in die Hinterschneidung (13), umfasst,
wobei das Luftführungssystem (3) mittels der Hinterschneidung (13) und/oder des zumindest einen Rastfingers (11) an der Nabenkappe (2) fixiert und/oder fixierbar ist.

5. Nabenkappensystem (1) gemäß einem der Ansprüche 2 bis 4,
wobei das Luftführungssystem (3) und/oder die Nabenkappe (2) derart ausgestaltet ist, dass das Luftführungssystem (3) rotationsfest, insbesondere formschlüssig, gegenüber der Nabenkappe (2) gehalten ist.

6. Nabenkappensystem (1) gemäß einem der Ansprüche 2 bis 5,
wobei das Luftführungssystem (3) und/oder die Nabenkappe (2) derart ausgestaltet ist, dass das Luftführungssystem (3) nur in einer einzigen vorbestimmten Position, insbesondere Drehposition vorteilhafterweise um die Axialrichtung (A), an der Nabenkappe (2) befestigt sein kann, oder
wobei das Luftführungssystem (3) und/oder die Nabenkappe (2) derart ausgestaltet ist, dass das Luftführungssystem (3) nur in einer festgelegten Menge von mehreren vorbestimmten Positionen, insbesondere Drehpositionen um die Axialrichtung (A), an der Nabenkappe (2) befestigt sein kann.

7. Nabenkappensystem (1) gemäß einem der vorhergehenden Ansprüche,
wobei das Nabenkappensystem (1) ein Adapterelement (14) umfasst,
wobei das Luftführungssystem (3) mit dem Adapterelement (14) reversibel verbunden und/oder verbindbar ist,
wobei das Adapterelement (14) reversibel mit der Nabenkappe (2) verbunden und/oder verbindbar ist.

8. Nabenkappensystem (1) gemäß einem der vorhergehenden Ansprüche,
wobei die Nabenkappe (2) ein sich in Axialrichtung (A) erstreckendes Kragenelement (8) umfasst,
wobei zumindest ein in Axialrichtung (A) von dem Zentraldurchbruch (32) abgewandter distaler Endabschnitt des Kragenelements (8) in der Axialrichtung (A) das Luftführungssystem (3) überragt,
wobei das Kragenelement insbesondere zumindest einen Teil des Luftführungssystems (3) und/oder den Zentraldurchbruch (32) zumindest abschnittsweise in eine Radialrichtung (R) einzäunt.

9. Nabenkappensystem (1) gemäß einem der vorhergehenden Ansprüche,
wobei das Luftführungssystem (3) von einer ersten Position in eine zweite Position überführbar ist, wobei das Luftführungssystem (3) in der zweiten Position in Axialrichtung (A) gesehen über die Nabenkappe (2) hinausragt, wobei das Luftführungssystem (3) in der ersten Position in Axialrichtung (A) gesehen nicht über die Nabenkappe (2) hinausragt.

10. Nabenkappensystem (1) gemäß Anspruch 9,
wobei das Nabenkappensystem (1) eine Faltenbalgvorrichtung (20), insbesondere zum Ein- und Ausziehen und/oder Verlagern des Luftführungssystems (3) in Axialrichtung (A), umfasst.

11. Nabenkappensystem (1) gemäß einem der vorhergehenden Ansprüche,
wobei die Nabenkappe (2) einen Zentralkörper (36) und einen Montagekörper (38) aufweist,
wobei der Montagekörper (38) dazu dient, insbesondere mittels Befestigungsmitteln (37), die Nabenkappe (2) an einem Rad oder einer Nabe festzulegen,
wobei der Zentralkörper (36) den Zentraldurchbruch (32) ausbildet und/oder
wobei der Zentralkörper (36) in oder an einer Montageöffnung des Montagekörpers (38) festgelegt ist.

12. Fahrzeug (40), insbesondere Nutzfahrzeug, umfassend ein Nabenkappensystem (1) gemäß einem der vorhergehenden Ansprüche.

13. Verfahren zum Montieren eines Nabenkappensystems (1) mit einer Nabenkappe (2) und einem Luftführungssystem (3) für ein Reifendruckregulierungssystem, umfassend die Schritte
- Verlagern, insbesondere translatorisches Verlagern, des Luftführungssystems (3) in Axialrichtung (A) in eine erste Position, sodass das Luftführungssystem (3) in Axialrichtung (A) der Nabenkappe (2) gesehen nicht über die Nabenkappe (2) hinausragt;
- Bereitstellen des Nabenkappensystems (1);
- Einbauen des Nabenkappensystems (1) in ein Fahrzeug (40), insbesondere Nutzfahrzeug, und/oder in ein Rad eines Fahrzeugs (4), insbesondere Nutzfahrzeugs;
- Verlagern, insbesondere translatorisches Verlagern, des Luftführungssystems (3) in Axialrichtung (A) in eine zweite Position, sodass das Luftführungssystem (3) in Axialrichtung (A) der Nabenkappe (2) gesehen zumindest auf einer Seite über die Nabenkappe (2) hinausragt.

## Claims

1. Hub cap system (1) for a vehicle, in particular a commercial vehicle,
comprising a hub cap (2) and an airflow system (3), the hub cap (2) being designed to rotate about an axial direction (A), the hub cap (2) having a central opening (32) which extends in particular in the axial direction (A), wherein the airflow system (3) has a primary connection (6) and a secondary connection (4), wherein the airflow system (3) extends partially into or through the central opening (32), **characterized in that** the airflow system (3) is relocatable and/or extendable relative to the hub cap in the axial direction (A), in particular translationally.

2. Hub cap system (1) according to claim 1, wherein the airflow system (3) is reversibly connected to the hub cap (2).

3. The hub cap system (1) according to any one of the preceding claims, wherein the airflow system (3) is fixed to the hub cap (2) in a form-fitting manner, in particular reversibly.

4. Hub cap system (1) according to claim 2 or 3, wherein the airflow system (3) and/or the hub cap (2) comprises an at least sectionally circumferential, in particular inner or outer, undercutting (13) around the axial direction (A), and/or wherein the hub cap (2) and/or the airflow system (3) comprises at least one finger lock (11), in particular for engaging in the undercutting (13), wherein the airflow system (3) is fixed and/or can be fixed to the hub cap (2) by means of the undercutting (13) and/or the at least one finger lock (11).

5. Hub cap system (1) according to one of claims 2 to 4, wherein the airflow system (3) and/or the hub cap (2) is designed, in such a way that the airflow system (3) is held in a rotationally fixed, in particular form-fitting, manner relative to the hub cap (2).

6. Hub cap system (1) according to one of claims 2 to 5, wherein the airflow system (3) and/or the hub cap (2) is designed in such a way that the airflow system (3) is only in a single predetermined position, in particular rotational position advantageously about the axial direction (A), to the hub cap (2), or wherein the airflow system (3) and/or the hub cap (2) is designed in such a way that the airflow system (3) can only be attached to the hub cap (2) in a fixed set of several predetermined positions, in particular rotational positions about the axial direction (A).

7. Hub cap system (1) according to one of the preceding claims, wherein the hub cap system (1) comprises an adapter element (14), wherein the airflow system (3) is reversibly connected and/or connectable to the adapter element (14), wherein the adapter element (14) is reversibly connected and/or connectable to the hub cap (2).

8. Hub cap system (1) according to one of the preceding claims, wherein the hub cap (2) comprises a collar element (8) extending in axial direction (A), wherein at least one distal end portion of the collar element (8) facing away from the central opening (32) in axial direction (A) projects beyond the airflow system (3) in axial direction (A), wherein the collar element in particular encloses at least a part of the air guidance system (3) and/or the central opening (32) at least in sections in a radial direction (R).

9. Hub cap system (1) according to one of the preceding claims, wherein the airflow system (3) can be transferred from a first position to a second position, wherein the airflow system (3) projects beyond the hub cap (2) in the second position as seen in the axial direction (A) of, wherein the airflow system (3) does not project beyond the hub cap (2) in the first position as seen in the axial direction (A).

10. The hub cap system (1) according to claim 9, wherein the hub cap system (1) comprises a bellows device (20), in particular for retracting and extending and/or displacing the air guiding system (3) in axial direction (A).

11. Hub cap system (1) according to one of the preceding claims, wherein the hub cap (2) comprises a central body (36) and a mounting body (38), wherein the mounting body (38) serves to fix the hub cap (2) to a wheel or a hub, in particular by means of fastening means (37), wherein the central body (36) forms the central opening (32) and/or wherein the central body (36) is fixed in or at a mounting opening of the mounting body (38).

12. A vehicle (40), in particular a commercial vehicle, comprising a hub cap system (1) according to any one of the preceding claims.

13. Method for mounting a hub cap system (1) comprising a hub cap (2) and an airflow system (3) for a tire pressure regulation system, comprising the steps of
- displacing, in particular translationally displacing, the airflow system (3) in the axial direction (A) into a first position, so that the airflow system (3) does not project beyond the hub cap (2) when viewed in the axial direction (A) of the hub cap (2);
- Providing the hub cap system (1);
- Installing the hub cap system (1) in a vehicle (40), in particular a commercial vehicle, and/or in a wheel of a vehicle (4), in particular a commercial vehicle;
- displacing, in particular translationally displacing, the airflow system (3) in the axial direction (A) into a second position, so that the airflow system (3) projects beyond the hub cap (2) on at least one side as viewed in the axial direction (A) of the hub cap (2).

## Revendications

1. Système de chapeau de moyeu (1) pour un véhicule, en particulier pour un véhicule utilitaire, comportant un chapeau de moyeu (2) et un système de guidage d'air (3),
le chapeau de moyeu (2) étant conçu pour tourner autour d'une direction axiale (A),
le chapeau de moyeu (2) présentant un ajour central (32) qui s'étend en particulier dans la direction axiale (A),
le système de guidage d'air (3) présentant un raccordement primaire (6) et un raccordement secondaire (4),
le système de guidage d'air (3) s'étendant en partie dans ou à travers l'ajour central (32),
**caractérisé en ce que** le système de guidage d'air (3) peut être déplacé et/ou déployé, en particulier en translation, par rapport au chapeau de moyeu dans la direction axiale (A).

2. Système de chapeau de moyeu (1) selon la revendication 1,
dans lequel le système de guidage d'air (3) est relié de manière réversible au chapeau de moyeu (2).

3. Système de chapeau de moyeu (1) selon l'une des revendications précédentes,
dans lequel le système de guidage d'air (3) est fixé au chapeau de moyeu (2) par complémentarité de forme, en particulier de manière réversible.

4. Système de chapeau de moyeu (1) selon la revendication 2 ou 3,
dans lequel le système de guidage d'air (3) et/ou le chapeau de moyeu (2) présente une contre-dépouille (13), en particulier intérieure ou extérieure, qui s'étend au moins localement autour de la direction axiale (A),
et/ou
dans lequel le chapeau de moyeu (2) et/ou le système de guidage d'air (3) comprend au moins un doigt d'encliquetage (11), destiné en particulier à s'engager dans la contre-dépouille (13),
le système de guidage d'air (3) étant fixé et/ou pouvant être fixé au chapeau de moyeu (2) à l'aide de la contre-dépouille (13) et/ou dudit au moins un doigt d'encliquetage (11).

5. Système de chapeau de moyeu (1) selon l'une des revendications 2 à 4,
dans lequel le système de guidage d'air (3) et/ou le chapeau de moyeu (2) est conçu de telle sorte que le système de guidage d'air (3) est maintenu solidairement en rotation, en particulier par complémentarité de forme, par rapport au chapeau de moyeu (2).

6. Système de chapeau de moyeu (1) selon l'une des revendications 2 à 5,
dans lequel le système de guidage d'air (3) et/ou le chapeau de moyeu (2) est conçu de telle sorte que le système de guidage d'air (3) ne peut être fixé au chapeau de moyeu (2) que dans une seule position prédéterminée, en particulier une position de rotation avantageusement autour de la direction axiale (A), ou
dans lequel le système de guidage d'air (3) et/ou le chapeau de moyeu (2) est conçu de telle sorte que le système de guidage d'air (3) ne peut être fixé au chapeau de moyeu (2) que dans un nombre défini de plusieurs positions prédéterminées, en particulier des positions de rotation autour de la direction axiale (A).

7. Système de chapeau de moyeu (1) selon l'une des revendications précédentes,
dans lequel le système de chapeau de moyeu (1) comprend un élément adaptateur (14),
le système de guidage d'air (3) est relié et/ou peut être relié de manière réversible à l'élément adaptateur (14),
l'élément adaptateur (14) est relié et/ou peut être relié de manière réversible au chapeau de moyeu (2).

8. Système de chapeau de moyeu (1) selon l'une des revendications précédentes,
dans lequel le chapeau de moyeu (2) comprend un élément de collerette (8) s'étendant dans la direction axiale (A),
au moins une portion d'extrémité distale de l'élément de collerette (8) détournée de l'ajour central (32) dans la direction axiale (A) dépasse du système de guidage d'air (3) dans la direction axiale (A),
en particulier, l'élément de collerette délimite au moins une partie du système de guidage d'air (3) et/ou l'ajour central (32) au moins localement dans une direction radiale (R).

9. Système de chapeau de moyeu (1) selon l'une des revendications précédentes,
dans lequel le système de guidage d'air (3) peut être transféré d'une première position à une deuxième position,
dans la deuxième position, le système de guidage d'air (3) dépasse du chapeau de moyeu (2), vu dans la direction axiale (A),
dans la première position, le système de guidage d'air (3) ne dépasse pas du chapeau de moyeu (2), vu dans la direction axiale (A).

10. Système de chapeau de moyeu (1) selon la revendication 9,
dans lequel le système de chapeau de moyeu (1) comprend un dispositif à soufflet (20), en particulier pour rétracter et déployer et/ou déplacer le système de guidage d'air (3) dans la direction axiale (A).

11. Système de chapeau de moyeu (1) selon l'une des revendications précédentes,
dans lequel le chapeau de moyeu (2) comporte un corps central (36) et un corps de montage (38),
le corps de montage (38) sert à fixer le chapeau de moyeu (2) sur une roue ou un moyeu, en particulier à l'aide de moyens de fixation (37),
le corps central (36) forme l'ajour central (32), et/ou
le corps central (36) est fixé dans ou sur une ouverture de montage du corps de montage (38).

12. Véhicule (40), en particulier véhicule utilitaire, comportant un système de chapeau de moyeu (1) selon l'une des revendications précédentes.

13. Procédé de montage d'un système de chapeau de moyeu (1) comportant un chapeau de moyeu (2) et un système de guidage d'air (3) pour un système de régulation de la pression des pneus, comprenant les étapes consistant à :
- déplacer, en particulier déplacer en translation, le système de guidage d'air (3) dans la direction axiale (A) vers une première position, de sorte que le système de guidage d'air (3) ne dépasse pas du chapeau de moyeu (2), vu dans la direction axiale (A) du chapeau de moyeu (2) ;
- fournir le système de chapeau de moyeu (1) ;
- installer le système de chapeau de moyeu (1) dans un véhicule (40), en particulier dans un véhicule utilitaire, et/ou dans une roue d'un véhicule (4), en particulier d'un véhicule utilitaire ;
- déplacer, en particulier déplacer en translation, le système de guidage d'air (3) dans la direction axiale (A) vers une deuxième position, de sorte que le système de guidage d'air (3) dépasse au moins d'un côté du chapeau de moyeu (2), vu dans la direction axiale (A) du chapeau de moyeu (2).
